(19) 

Europäisches Patentamt
European Patent Office
Office européen des brevets

(11) **EP 2 436 436 A1**

(12) **EUROPEAN PATENT APPLICATION**
published in accordance with Art. 153(4) EPC

(43) Date of publication:
**04.04.2012 Bulletin 2012/14**

(21) Application number: **10780297.7**

(22) Date of filing: **28.05.2010**

(51) Int Cl.:
**B01D 53/32** *(2006.01)* **B01J 35/02** *(2006.01)*

(86) International application number:
**PCT/JP2010/003591**

(87) International publication number:
**WO 2010/137337 (02.12.2010 Gazette 2010/48)**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **29.05.2009 JP 2009130440**

(71) Applicant: **Sustainable Titania Technology Incorporated Tokyo 151-0053 (JP)**

(72) Inventors:
• **OGATA, Shiro**
 **Tokyo 151-0053 (JP)**
• **MATSUI, Yoshimitsu**
 **Tokyo 151-0053 (JP)**

(74) Representative: **Vaillant, Jeanne et al Ernest Gutmann - Yves Plasseraud S.A.S. 3, rue Auber 75009 Paris (FR)**

(54) **METHOD FOR REMOVING OR DETOXIFYING GAS**

(57) The present invention relates to a method for removing negatively-charged gas molecules, comprising the steps of: adsorbing negatively-charged gas molecules by a substrate carrying a positively-charged substance or a positively-charged substance and a negatively-charged substance on the surface of the substrate or in a surface layer of the substrate; and desorbing the aforementioned negatively-charged gas molecules adsorbed on the aforementioned substrate, from the substrate using a fluid. According to the present invention, negatively-charged gas molecules are removed or detoxified by adsorbing the same by a substrate carrying a positively-charged substance, or a positively-charged substance and a negatively-charged substance, on the surface of the substrate. Thereby, it is possible to provide a simple process by which negatively-charged gas molecules are able to be effectively and economically removed or detoxified.

FIG. 4

EP 2 436 436 A1

Printed by Jouve, 75001 PARIS (FR)

**Description**

TECHNICAL FIELD

Priority is claimed on Japanese Patent Application No. 2009-130440, filed on May 29, 2009, the content of which is incorporated herein by reference.

The present invention relates to a method for removing carbon dioxide from the atmosphere by adsorbing carbon dioxide present in the atmosphere, or a method for detoxifying atmospheric molecules which may be negatively charged, such as carbon dioxide and the like, and returning the detoxified molecules into the atmosphere.

BACKGROUND ART

Since the beginning of the modern industrial revolution, carbon dioxide levels in the atmosphere have continuously increased as a byproduct of various industrial activities such as thermal power generation and the like. It is believed that the excess amount of carbon dioxide in the atmosphere is one of the key factors involved in global warming.

As a method for removing carbon dioxide from the atmosphere, for example, Japanese Patent No. 4180991 proposes a method for adsorbing carbon dioxide with porous substances supporting rubidium carbonate and/or cesium carbonate. In addition, Japanese Patent No. 4181062 proposes a method for adsorbing carbon dioxide with a magnesium oxide-containing adsorber.

Carbon dioxide may be negatively charged. In the same manner as that of carbon dioxide, as examples of gases which may be negatively charged, mention may be made of oxygen, ozone, halogen gases, fluorinated compounds, chlorine compounds, nitrogen oxides, sulfur oxides, ions thereof, and the like. Many of these are environmentally harmful substances. The amounts thereof in the atmosphere tend to increase as byproducts of various industrial activities in the same manner as that of carbon dioxide.

As examples of devices for removing or detoxifying the aforementioned various types of harmful gases, mention may be made of, for example, a purification system for exhaust fumes with various catalysts and the like.

PRIOR ART DOCUMENTS

Patent Documents

Patent Document 1: Japanese Patent No. 4180991
Patent Document 2: Japanese Patent No. 4181062

DISCLOSURE OF THE INVENTION

Problems to be Solved by the Invention

However, in order to desorb carbon dioxide from the porous substances or adsorbers which have adsorbed carbon dioxide, in general, operations of heating the aforementioned porous substances or adsorbers, subjecting them to a chemical treatment, treating under reduced pressure or increased pressure, or the like must be carried out. Therefore, the aforementioned operations may require a lot of equipment, and need a lot of energy. For this reason, there is a problem in terms of economical inefficiencies.

In addition, a purification system for exhaust fumes which can remove and detoxify harmful gases which may be negatively charged needs use of a large amount of expensive metals such as palladium, platinum and the like. This may also cause a problem in terms of economical inefficiencies.

The present invention was made in view of the aforementioned prior art, and has an objective thereof of providing a simple means to effectively and economically remove or detoxify carbon dioxide and other gases which may be negatively charged in the atmosphere.

Means for Solving the Problems

The objective of the present invention can be achieved by a method for removing negatively-charged gas molecules, comprising the steps of:

adsorbing negatively-charged gas molecules by a substrate carrying a positively-charged substance, or a positively-charged substance and a negatively-charged substance, on the surface of the substrate or in a surface layer of the substrate; and
desorbing the aforementioned negatively-charged gas molecules adsorbed on the aforementioned substrate, from the substrate using a fluid,

as well as
a method for detoxifying negatively-charged gas molecules, comprising the steps of:

adsorbing negatively-charged gas molecules by a substrate carrying a positively-charged substance or a positively-charged substance and a negatively-charged substance on the surface of the substrate or in a surface layer of the substrate;
removing electrons from the aforementioned negatively-charged gas molecules adsorbed on the aforementioned substrate to form neutral gas molecules; and
desorbing the aforementioned neutral gas molecules from the substrate.

In the aforementioned method for removing negatively-charged gas molecules, the aforementioned negatively-charged gas molecules are preferably carbon dioxide.

In the aforementioned method for detoxifying negatively-charged gas molecules, the aforementioned negatively-charged gas molecules are preferably oxygen, ozone, halogen gases, fluorine compounds, chlorine compounds, nitrogen oxides, sulfur oxides, or ions thereof.

The aforementioned positively-charged substance is preferably one or more substances selected from the group consisting of:

(1) a positive ion;
(2) a conductor or dielectric having positive charges; and
(3) a composite formed from a conductor, and a dielectric or a semiconductor, having positive charges.

The aforementioned negatively-charged substance is preferably one or more substances selected from the group consisting of:

(4) a negative ion;
(5) a conductor or dielectric having negative charges;
(6) a composite formed from a conductor, and a dielectric or a semiconductor, having negative charges; and
(7) a substance having a photocatalytic function.

The present invention can be carried out by a substrate for removing or detoxifying negatively-charged gas molecules, which carries a positively-charged substance, or a positively-charged substance and a negatively-charged substance, on the surface of the substrate or in the surface layer of the substrate.

At least one part of the surface of the aforementioned substrate preferably has microasperities or microholes.

The aforementioned microasperities can be formed by applying a reflectivity reducer comprising carbon and/or a thermally-decomposable organic compound, as well as titanium oxide and/or an organic silicon compound and/or an inorganic silicon compound, on the surface of the substrate, followed by heating. In addition, the aforementioned microholes can be formed by applying a reflectivity reducer comprising titanium oxide and/or an organic silicon compound and/or an inorganic silicon compound without carbon and/or a thermally-decomposable organic compound, on the surface of the substrate, followed by drying at room temperature.

At least one part of the aforementioned substrate is preferably light-permissive.

The aforementioned substrate preferably constitutes at least one part of an optical element, an optical cell, a transportation means such as an automobile, a train, an airplane, or the like, an indoor or outdoor structure such as road or the like, an interior or exterior architecture or a work piece.

EFFECTS OF THE INVENTION

In accordance with the present invention, carbon dioxide and other gases which may be negatively charged in the atmosphere can be effectively and economically removed or detoxified.

In addition, the substrate of the present invention can exhibit a hydrophilic property. In addition, adherence of contaminants on the surface of the substrate can be prevented by means of electrostatic repulsion. For this reason, a clean state can be maintained over a long time. In addition, in the case in which microasperities are present in order to adsorb a large amount of negatively-charged gases on the surface of the substrate, or in the case in which a surface structure having microholes formed by particle laminates is present, reflection of light on the surface of the substrate can be reduced. For this reason, as long as the substrate has a light-transmissive moiety, an amount of light transmitting through the aforementioned substrate can increase.

In addition, in the case of obtaining the aforementioned microasperities by applying a reflectivity reducer comprising carbon and/or a thermally-decomposable organic compound, as well as titanium oxide and/or an organic silicon compound and/or an inorganic silicon compound, on the surface of the substrate, followed by heating, or in the case of obtaining the aforementioned microholes by applying a reflectivity reducer comprising titanium oxide and/or an organic silicon compound and/or an inorganic silicon compound without carbon and/or a thermally-decomposable organic compound, on the surface of the substrate, followed by drying at room temperature, as long as the substrate has a light-transmissive moiety, a light-transmissive property of the aforementioned substrate can be further improved.

Therefore, the substrate of the present invention can be suitably used in an optical element, an optical cell, a transportation means such as an automobile, a train, an airplane, or the like, an indoor or outdoor structure such as road or the like, an interior or exterior architecture or a work piece.

BRIEF DESCRIPTION OF THE DRAWINGS

FIG. 1 is a conceptual diagram showing a mechanism of imparting positive charges by a composite.
FIG. 2 is a conceptual diagram showing an example of a mechanism of imparting positive charges and negative charges in the present invention.
FIG. 3 is a conceptual diagram showing another example of a mechanism of imparting positive charges and negative charges in the present invention.
FIG. 4 is a conceptual diagram showing a mechanism of adsorbing negatively-charged gas molecules on a substrate which carries positive charges and removing them therefrom.
FIG. 5 is a conceptual diagram showing a mechanism of adsorbing negatively-charged gas molecules on a substrate which carries positive charges and negative charges and removing them therefrom.
FIG. 6 is a conceptual diagram showing a mechanism of adsorbing and detoxifying gas molecules on a substrate which carries positive charges.
FIG. 7 is a conceptual diagram showing a mechanism of removing contaminants from the surface of a substrate which carries positive charges.
FIG. 8 is a conceptual diagram showing a mechanism of removing contaminants from the surface of a substrate which carries positive charges and negative charges.
FIG. 9 is a drawing showing an outline of an example of a first method for manufacturing titanium oxide.

BEST MODES FOR CARRYING OUT THE INVENTION

Carbon dioxide, as well as oxygen, ozone, halogen gases, fluorinated compounds, chlorine compounds, nitrogen oxides, sulfur oxides, ions thereof, and the like may carry negative charges or may be negatively charged. For example, oxygen can be present as a super oxide anion radical ($O_2$), and the aforementioned radical carries negative charges. Hereinafter, the aforementioned gas molecules carrying negative charges or gas molecules which can be negatively charged are referred to as "negatively-charged gas molecules".

The present invention is **characterized in that** the aforementioned negatively-charged gas molecules are removed or detoxified via a step of adsorbing negatively-charged gas molecules by a substrate carrying a positively-charged substance or a positively-charged substance and a negatively-charged substance on the surface of the substrate or in a surface layer of the substrate.

The substrate used in the present invention is not particularly restricted. Hydrophilic or hydrophobic, inorganic substrates and organic substrates or combinations thereof can be employed. At least one part or preferably whole parts of the substrate are preferably light-transmissive.

As examples of the inorganic substrates, mention may be made of, for example, substrates formed from substances of transparent or opaque glass such as soda lime glass, quartz glass, heat resistant glass or the like, or metal oxides such as indium tin oxide (ITO) or the like, and silicon or a metal and the like. In addition, as examples of the organic substrates, mention may be made of, for example, substrates formed from plastics. As detailed examples of the plastics, mention may be made of, for example, thermoplastic resins such as polyethylene, polypropylene, polycarbonate, acrylic resins, polyester such as PET or the like, polyamide, ABS resins, polyvinyl chloride or the like, and thermosetting resins such as polyurethane, melamine resins, urea resins, silicone resins, fluorine resins, epoxy resins or the like. In view of heat resistance, inorganic substrates are preferable, and in particular, at least one part or whole parts of the substrate are preferably formed from a resin, a metal or glass. As materials of the organic substrates, thermosetting resins are preferable.

The shape of the substrate is not particularly restricted, and any shapes such as cubics, cuboids, spheres, spindles, sheets, films, fibers, or the like can be employed. The surface of the substrate may be subjected to a hydrophilic treatment or a hydrophobic treatment such as a corona discharge treatment, a UV exposure treatment, or the like. The surface of the substrate may have a flat surface and/or a curved surface, and may be subjected to embossing. A flat and smooth surface is preferable.

The surface of the substrate may be coated with paint. As the coating material, so-called paint containing a colorant and a synthetic resin such as an alkyd resin, an acrylic resin, an amino resin, a polyurethane resin, an epoxy resin, a silicone resin, a fluorine resin, an acrylic silicone resin, an unsaturated polyester resin, an ultraviolet-curable resin, a phenol resin, a vinyl chloride resin, or a synthetic resin emulsion can be preferably employed.

The thickness of the aforementioned coating film preferably ranges from 0.01 $\mu$m to 100 $\mu$m, more preferably ranges from 0.1 $\mu$m to 50 $\mu$m, and in particular, preferably ranges from 0.5 $\mu$m to 10 $\mu$m. In addition, as a method for coating, for example, a spray coating method, a dip coating method, a flow coating method, a spin coating method, a roll coating method, a brush coating method, a sponge coating method, or the like can be employed. In addition, in order to improve physical properties such as hardness of the coating film, adhesiveness with the substrate, and the like, heating is preferably carried out within a range acceptable for the substrate and the coating film.

The aforementioned positively charged substance is not particularly restricted, as long as it is a substance carrying positive charges, and is preferably one or more types of substances selected from the group consisting of (1) a positive ion; (2) a conductor or dielectric having positive charges; and (3) a composite formed from a conductor and a dielectric or a semiconductor, having positive charges.

The aforementioned positive ion is not particularly restricted. As the positive ion, an ion of an alkali metal such as sodium or potassium; an ion of an alkali earth metal such as calcium; and an ion of a metal element such as aluminum, cesium, indium, cerium, selenium, chromium, nickel, antimony, iron, copper, manganese, tungsten, zirconium, zinc, or the like, are preferable. In particular, a copper ion is preferable. In addition, a cationic dye such as methyl violet, Bismarck brown, methylene blue, malachite green, or the like, an organic molecule having a cationic group such as a silicone modified with a quaternary nitrogen atom-containing group, or the like can also be employed. The valence of the ion is not particularly restricted. For example, a monovalent to tetravalent positive ion can be employed.

As a supply source of the aforementioned metal ion, a metal salt can also be employed. As examples thereof, mention may be made of various metal salts such as aluminum chloride, chromium chloride, nickel chloride, antimony (III) chloride, antimony (V) chloride, iron (II) chloride, iron (III) chloride, cesium chloride, indium (III) chloride, cerium (III) chloride, selenium tetrachloride, copper (II) chloride, manganese chloride, tungsten tetrachloride, tungsten oxydichloride, potassium tungstate, zirconium oxychloride, zinc chloride, barium carbonate, and the like. In addition, a metal hydroxide such as aluminum hydroxide, iron hydroxide, chromium hydroxide, or indium hydroxide; a hydroxide such as tungstosilicic acid; or oxides such as fat oxides, can also be employed.

As examples of the conductor or dielectric having positive charges, mention may be made of conductors or dielectrics in which positive charges are generated, other than the aforementioned positive ions. The conductor employed in the present invention is preferably a metal in view of durability. As examples thereof, mention may be made of metals such as aluminum, tin, cesium, indium, cerium, selenium, chromium, nickel, antimony, iron, copper, manganese, tungsten, zirconium, zinc or the like and a metal oxide thereof. In addition, a composite or alloy of the aforementioned metals can also be employed. The shape of the conductor is not particularly restricted. The conductor may be in any shape such as particles, flakes, fibers, or the like.

As the conductor, a metal salt of a certain metal can also be employed. As examples thereof, mention may be made of, for example, various metal salts such as aluminum chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, tungsten tetrachloride, tungsten oxydichloride, potassium tungstate, gold chloride, zirconium oxychloride, zinc chloride, and the like. In addition, indium hydroxide, a hydroxide or oxide of tungstosilicic acid or the like can also be employed.

As examples of dielectrics having positive charges, mention may be made of, for example, dielectrics such as wool, nylon, and the like which are positively charged by friction.

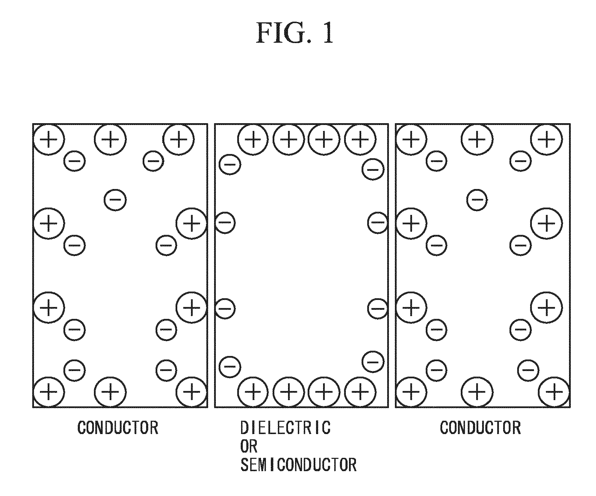

Next, the principle of imparting positive charges to the aforementioned composite is shown in FIG. 1. FIG. 1 is a conceptual diagram in which a combination of (a conductor)-(a dielectric or a semiconductor)-(a conductor) is arranged on the surface of the substrate or in a surface layer of the substrate, not shown in the drawing. The conductor can have a positively charged state on the surface due to the presence of free electrons at a high concentration in which electrons can freely move inside thereof. In addition, as the conductor, a conductive substance containing positive ions can also be employed.

On the other hand, the dielectric or semiconductor adjacent to the conductors is subjected to charge polarization by the effects of the charge conditions on the surface of the conductor. As a result, at the side of the dielectric or semiconductor adjacent to the conductor, negative charges are produced, while at the side of the dielectric or semiconductor which is not adjacent to the conductor, positive charges are produced. Due to the aforementioned effects, the surface of the combination of (a conductor)-(a dielectric or a semiconductor)-(a conductor) is positively charged, and positive charges are provided on the surface of the substrate. The size of the aforementioned composite (which means the length of the longest axis passing through the composite) can range from 0.2 nm to 100 $\mu$m, and preferably ranges from 0.2 nm to 10 $\mu$m, more preferably ranges from 0.2 nm to 1 $\mu$m, and particularly preferably ranges from 0.1 nm to 100 nm.

The conductor for forming the composite employed in the present invention is preferably a metal in view of durability. Examples thereof include metals such as aluminum, tin, cesium, indium, cerium, selenium, chromium, nickel, antimony, iron, silver, copper, manganese, platinum, tungsten, zirconium, zinc, or the like. In addition, an oxide, a composite or alloy of the aforementioned metals can also be employed. The shape of the conductor is not particularly restricted. The conductor may be in any shape such as particles, flakes, fibers, or the like.

As the conductor, a metal salt of a certain metal can also be employed. Examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, platinum (II) chloride, tungsten tetrachloride, tungsten oxydichloride, potassium tungstate, gold chloride, zirconium oxychloride, zinc chloride, iron lithium phosphate, and the like. In addition, a hydroxide of the aforementioned conductive metal such as aluminum hydroxide, iron hydroxide, chromium hydroxide, or the like, as well as an oxide of the aforementioned conductive metal such as zinc oxide or the like can also be employed.

As the conductor, a conductive polymer such as polyaniline, polypyrrol, polythiophene, polythiophene vinylon, polyisothianaphthene, polyacetylene, polyalkyl pyrrol, polyalkyl thiophene, poly-p-phenylene, polyphenylene vinylon, polymethoxyphenylene, polyphenylene sulfide, polyphenylene oxide, polyanthrathene, polynaphthalene, polypyrene, polyazulene, or the like can also be employed.

As the semiconductor, for example, C, Si, Ge, Sn, GaAs, Inp, GeN, ZnSe, PbSnTe, or the like, can be employed, and a semiconductor metal oxide, a photosemiconductor metal, or a photosemiconductor metal oxide can also be employed. Preferably, in addition to titanium oxide ($TiO_2$), ZnO, $SrTiOP_3$, CdS, CdO, CaP, InP, $In_2O_3$, CaAs, $BaTiO_3$, $K_2NbO_3$, $Fe_2O_3$, $Ta_2O_3$, $WO_3$, NiO, $Cu_2O$, SiC, $SiO_2$, $MOS_3$, InSb, $RuO_2$, $CeO_2$, or the like can be employed. A compound in which the photocatalytic effects are inactivated by Na or the like is preferable.

As the dielectric, barium titanate (PZT), which is a strong dielectric, so-called SBT, BLT, or a composite metal such as PZT, PLZT-(Pb, La) (Zr, Ti)$O_3$, SBT, SBTN-$SrBi_2(Ta, Nb)_2O_9$, BST- (Ba, Sr)$TiO_3$, LSCO- (La, Sr)$CoO_3$, BLT, BIT- (Bi, La) $_4Ti_3O_{12}$, BSO-$Bi_2SiO_5$, or the like can be employed. In addition, various weak dielectric materials such as a silane compound, a silicone compound, or a so-called organo-modified silica compound, which is an organic silicon compound, or an organic polymer insulating film allylene ether-based polymer, benzocyclobutene, fluorine-based polymer parylene N or F, a fluorinated amorphous carbon, or the like can also be employed.

The negatively-charged substance is not particularly restricted, as long as it is a substance carrying negative charges, and is preferably one or more type substances selected from the group consisting of (4) a negative ion; (5) a conductor or dielectric having negative charges; (6) a composite formed from a conductor and a dielectric or a semiconductor, having negative charges; and (7) a substance having a photocatalytic function.

The aforementioned negative ion is not particularly restricted. As the negative ion, a halogenide ion such as fluoride ion, chloride ion, iodide ion or the like; an inorganic ion such as a hydroxide ion, a sulfate ion, a nitrate ion, a carbonate ion, or the like; and an organic ion such as an acetate ion, or the like may be mentioned. The valence of the ion is not particularly restricted. For example, a monovalent to tetravalent negative ion can be employed.

As the conductor or dielectric having negative charges, mention may be made of conductors or dielectrics in which negative charges are generated, other than the aforementioned negative ions. As examples thereof, mention may be made of colloids of metals such as gold, silver, platinum, tin, and the like; elements such as graphite, sulfur, selenium, tellurium and the like; sulfides such as arsenic sulfide, antimony sulfide, mercury sulfide and the like; clay, glass powder, quartz powder, asbestos, starch, cotton, silk, wool and the like; or dyes such as prussian blue, indigo, aniline blue, eosin, naphthol yellow and the like. Among these, colloids of metals such as gold, silver, platinum, tin and the like are preferable. Silver colloids and tin colloids are particularly preferable. In addition thereto, negative electrodes of batteries, formed from various conductors as described above, and dielectrics such as Teflon (trademark), vinyl chlorides, polyethylenes and polyesters and the like, which are negatively charged, may be mentioned.

As the semiconductor, the aforementioned one can be used.

The photocatalytically functional substances contain specific metal compounds, and have a function of oxidizing and decomposing the organic and/or inorganic compounds on the surface of the aforementioned layer due to photoexcitation. It is generally believed that the photocatalytic principle relies on a specific metal compound producing radical species such as $OH^-$ or $O_2$ from oxygen or moisture in the air by means of photoexcitation, and the aforementioned radical species oxidize-reduce-decompose the organic and/or inorganic compounds.

As the aforementioned metal compound, in addition to representative titanium oxide ($TiO_2$), ZnO, $SrTiOP_3$,

CdS, CdO, CaP, InP, $In_2O_3$, CaAs, $BaTiO_3$, $K_2NbO_3$, $Fe_2O_3$, $Ta_2O_5$, $WO_3$, NiO, $Cu_2O$, SiC, $SiO_2$, $MoS_3$, InSb, $RuO_2$, $CeO_2$, and the like are known.

The photocatalytically functional substance may comprise a metal for improving photocatalytic effects (such as Ag or Pt). In addition, various substances such as metal salts or the like can be added within a range which does not deactivate the photocatalytic functions. As examples of the aforementioned metal salts, mention may be made of salts of metals such as aluminum, tin, chromium, nickel, antimony, iron, silver, cesium, indium, cerium, selenium, copper, manganese, calcium, platinum, tungsten, zirconium, zinc, or the like. In addition thereto, as some metals or non-metals, hydroxides or oxides thereof can also be employed. More particularly, examples thereof include various metal salts such as aluminum chloride, tin (II) chloride, tin (IV) chloride, chromium chloride, nickel chloride, antimony (III) chloride, antimony (V) chloride, iron (II) chloride, iron (III) chloride, silver nitrate, cesium chloride, indium (III) chloride, cerium (III) chloride, selenium tetrachloride, copper (II) chloride, manganese chloride, calcium chloride, platinum (II) chloride, tungsten tetrachloride, tungsten oxydichloride, potassium tungstate, gold chloride, zirconium oxychloride, zinc chloride, or the like. In addition, as compounds other than the metal salts, mention may be made of indium hydroxide, silicotungstic acid, silica sol, calcium hydroxide, or the like.

The aforementioned photocatalytically functional substance adsorbs, when excited, $OH^-$ (hydroxide radical) or $O_2^-$ (oxygenation radical) from adsorbed water and oxygen on the surface of a substance, and therefore, the surface thereof has a property of negative charges. If a positively-charged substance coexists therein, the photocatalytic function will be reduced or lost, depending on the concentration of the positive charges. However, in the present invention, the substance having a photocatalytic function does not need to exert oxidation decomposition effects on contaminants, and for this reason, it can be used as a negatively-charged substance.

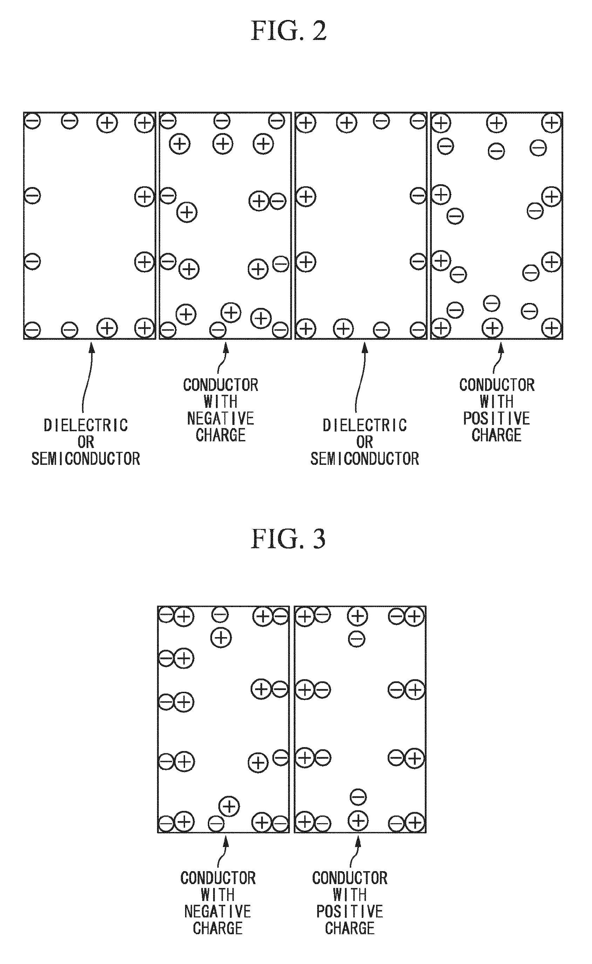

FIG. 2 is a conceptual diagram showing an example of a mechanism of imparting positive charges and negative charges on the surface of the substrate or in the surface layer of the substrate, in which a combination of (a dielectric or a semiconductor)-(a conductor having negative charges)-(a dielectric or a semiconductor)-(a conductor having positive charges) is provided on the surface of the substrate. As the conductor having negative charges and the conductor having positive charges shown in FIG. 2, those described above can be used.

As shown in FIG. 2, the dielectric or semiconductor adjacent to the conductor having negative charges is subjected to charge polarization by the effects of the charge conditions on the surface of the conductor. As a result, at the side of the dielectric or semiconductor adjacent to the conductor having negative charges, positive charges are produced, while at the side of the dielectric or semiconductor which is adjacent to the conductor having positive charges, negative charges are produced. Due to the aforementioned effects, the surface of the combination of (a dielectric or a semiconductor)-(a conductor)-(a dielectric or a semiconductor)-(a conductor) shown in FIG. 2 is positively or negatively charged. The size of the aforementioned composite (which means the length of the longest axis passing through the composite) of the conductor and the dielectric or semiconductor can range from 1 nm to 100 $\mu$m, and preferably ranges from 1 nm to 10 $\mu$m, more preferably ranges from 1 nm to 1 $\mu$m, and particularly preferably ranges from 1 nm to 100 nm. In addition, a ratio of the composition materials in the case of a composite comprising a conductor and a dielectric or a semiconductor, forming the positively-charged surface or positively-charged and negatively-charged surface ranges from 1:1 to 1:20 as a microparticle or volume ratio, with the proviso that on the light-transmissive substrate, the aforementioned ratio preferably ranges from 1:100 to 1:10,000, more preferably ranges from 1:100 to 1:6,000, and furthermore preferably ranges from 1:100 to 1:3,000.

FIG. 3 is conceptual diagram showing another mode of imparting positive charges and negative charges to the surface of the substrate or in the surface layer of the substrate.

In FIG. 3, a conductor having negative charges is adjacent to a conductor having positive charges, and the amount of the positive charges and negative charges is reduced due to contact disappearance or the like. As the conductor having negative charges and the conductor having positive charges, those described above can be used.

In the present invention, the negatively-charged gas molecules are removed or detoxified via the step of adsorbing the negatively-charged gas molecules by the substrate carrying the aforementioned positively-charged substance or the positively-charged substance and the negatively-charged substance, on the surface of the substrate or in the surface layer of the substrate.

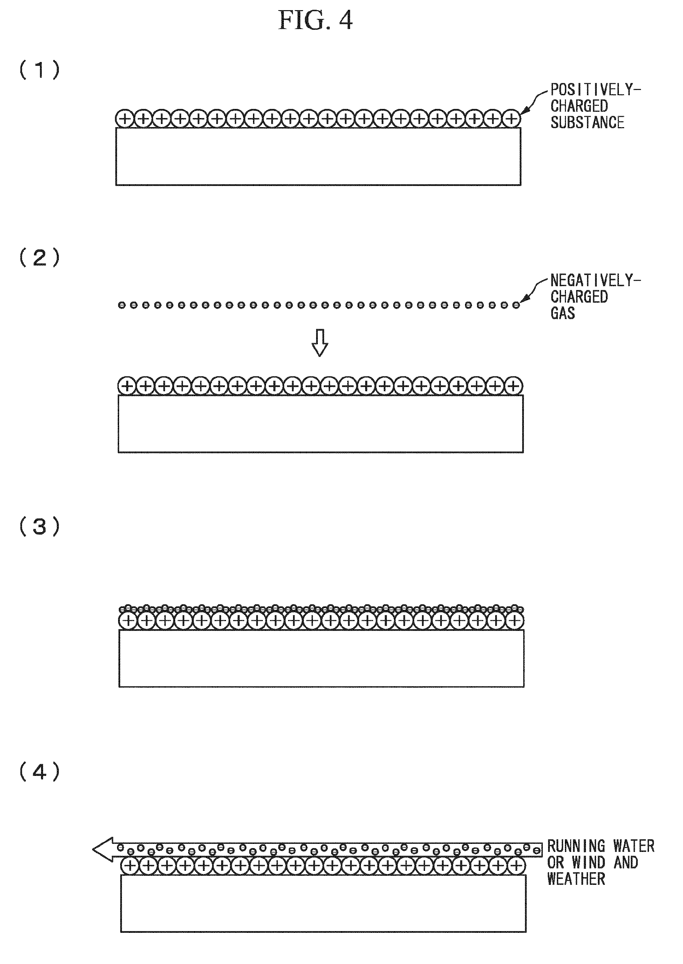

First, a mechanism of adsorbing carbon dioxide which corresponds to negatively-charged gas molecules by the substrate which is positively charged and then removing is shown in FIG. 4.

In the mode shown in FIG. 4, by arranging the aforementioned positively-charged substance on the surface of the substrate, positive charges are imparted on the surface of the substrate (FIG. 4 (1)).

Carbon dioxide which corresponds to negatively-charged gas molecules carries negative charges. For this reason, carbon dioxide is electrostatically attracted by the positive charges present on the surface of the substrate, and thereby, carbon dioxide is adsorbed on the surface of the substrate (FIG. 4 (2) and FIG. 4 (3)).

By means of effects of the physical fluids such as wind and weather, carbon dioxide desorbs from the surface of the substrate (FIG. 4 (3)). Here, the fluid means a substance which is continuously deformed in accordance with the strength of shearing force. Gas or liquid corresponds to the fluid. Typically, the fluid is water or air. If necessary, other liquids or gases or a mixture of water and other liquids or a mixture of air and other gases may be blown onto the surface of the substrate.

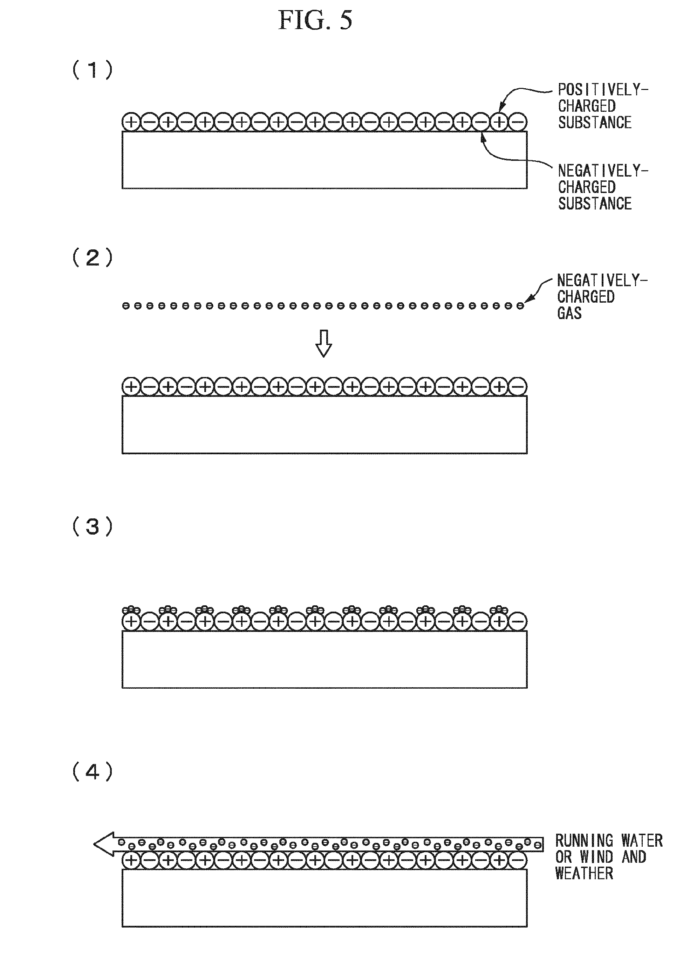

Next, a mechanism of adsorbing carbon dioxide which is negatively-charged gas molecules by the substrate which is positively charged and negatively charged, and then removing carbon dioxide is shown in FIG. 5.

In the mode shown in FIG. 5, the aforementioned positively-charged substance and the aforementioned negatively-charged substance are arranged on the surface of the substrate, and thereby, positive charges and negative charges are provided on the surface of the substrate (FIG. 5 (1)).

Carbon dioxide which is negatively-charged gas molecules is negatively charged. For this reason, carbon dioxide is electrostatically attracted by the positive charges present on the surface of the substrate, and adsorbed on the surface of the substrate (FIG. 5 (2) and FIG. 5 (3)). On the other hand, at the part which is negatively charged on the surface of the substrate, carbon dioxide is not adsorbed. Therefore, in view of an amount of adsorbed carbon dioxide on the surface of the substrate, it is believed that it is preferable that only positive charges be present on the surface of the substrate. However, in fact, there is a phenomenon such that the amount of adsorbed carbon dioxide is increased in the case of the presence of both positive charges and negative charges on the surface of the substrate, as compared with the case of the presence of only positive charges thereon.

In the same manner as that shown in FIG. 4, by means of effects of the physical fluids such as wind and weather, carbon dioxide is desorbed from the surface of the substrate (FIG. 5 (3)). Here, the fluid has the same meaning as that described above.

In accordance with the aforementioned methods, carbon dioxide desorbed from the surface of the substrate is absorbed by the soil, river, sea and the like, for example, in the state in which carbon dioxide is dissolved in water. The method of the present invention is naturally carried out on the substrate without needs of physical treatments such as heating and the like or other chemical treatments, and for this reason, the method can simply and economically remove carbon dioxide.

In order to effectively desorb carbon dioxide from the surface of the substrate, the surface of the substrate is preferably inclined with respect to the horizontal surface. The angle of inclination in this case is preferably increased. In the case in which running water depends on rain water, effects of desorbing the adsorbed materials are increased by inclining the surface of the substrate and thereby effectively receiving rain water. For this reason, the surface of the substrate is preferably arranged so as to have an inclination of horizon/verticality which is 1/100 or more, preferably 1/50 or more, and more preferably 1/20 or more.

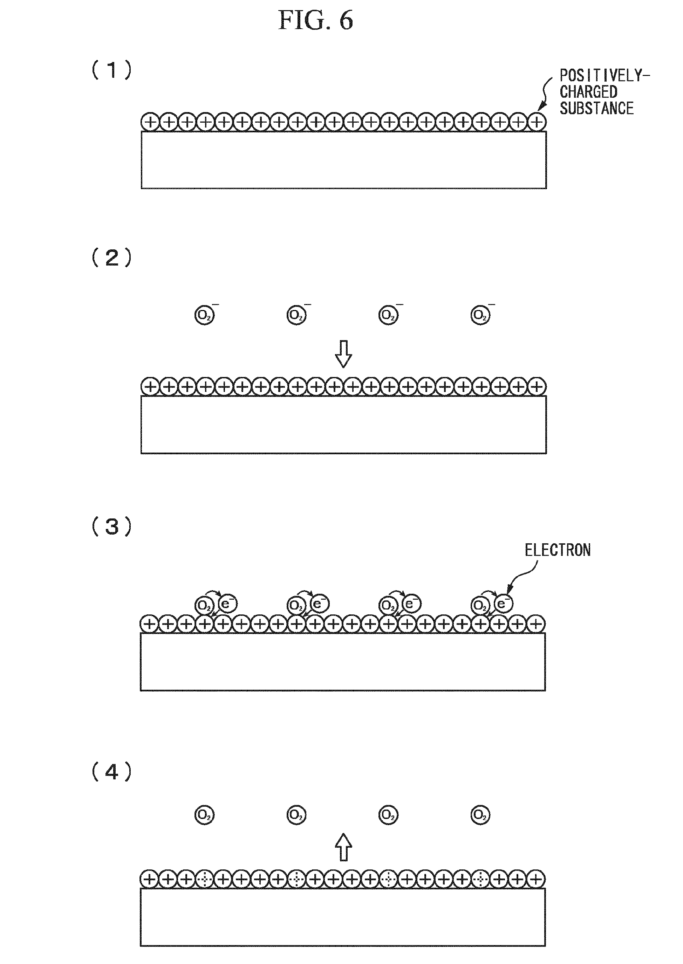

Next, a mechanism of adsorbing harmful negatively-charged gas molecules such as oxygen, ozone, halogen gases, fluorine compounds, chlorine compounds, nitrogen oxides, sulfur oxides, or ions thereof to the substrate which is positively charged and detoxified is shown in FIG. 6.

First, by arranging the aforementioned positively-charged substance on the surface of the substrate, positive charges are provided on the surface of the substrate (FIG. 6 (1)).

The aforementioned negatively-charged gas molecules carry negative charges, and for this reason, they are electrostatically attracted by positive charges on the surface of the substrate, and then adsorbed on the surface of the substrate (FIG. 6 (2)). Here, as the harmful negatively-charged gas molecules, superoxide anion radicals ($O_2^-$) are shown.

The adsorbed negatively-charged gas molecules release electrons on the surface of the substrate by the effects of the positive charges on the surface of the substrate, and become neutral or stable gas molecules (FIG. 6 (3)).

The aforementioned neutral or stable gas molecules are desorbed from the surface of the substrate (FIG. 6 (4)). No electrostatic effects are present between the aforementioned neutral or stable gas molecules and positive charges of the surface of the substrate. For this reason, the aforementioned neutral or stable gas molecules can be naturally desorbed from the aforementioned substrate. In order to enhance the desorbing effects, fluid may be blown onto the surface of the substrate. By means of natural effects such as wind and weather, the aforementioned neutral or stable gas molecules can also be easily desorbed from the surface of the substrate.

The description of the mechanism of adsorbing the harmful negatively-charged gas molecules by the substrate which carries both positive charges and negative charges and then removing is omitted since the mechanism is basically the same as that shown in FIG. 6. As the positive charge density of the surface of the substrate is increased, the aforementioned harmful gas molecules more easily release electrons. For this reason, in view of detoxification efficiency, it is preferable that only positive charges be present on the surface of the substrate.

As described above, the substrate having the positively-charged substance, or the positively-charged substance and negatively-charged substance on the surface of the substrate or in the surface layer of the substrate can be used as a substrate for removing or detoxifying negatively-charged gas molecules.

In order to effectively carry out the adsorbing and/or desorbing negatively-charged gases in accordance with the present invention, it is required to always subject the substrate to cleaning. The substrate of the present invention has the positively-charged substance or the positively-charged substance and negatively-charged substance on the surface of the substance or in the surface layer of the substance. For this reason, adherence of contaminants on the surface of the substrate can be prevented or reduced over a long time.

With respect to contaminants which cause fading or discoloration of the surface of a substrate, inorganic substances such as airborne carbons and/or organic substances such as oils are gradually deposited on the surface of the substrate, and thereby, they adhere to the surface of the substrate.

It is believed that mainly outdoor airborne contaminants, and in particular, oil components, are subjected to a so-called photooxidation reaction due to various types of electromagnetic radiation such as sunlight and the like, and are in an "oxidized" state.

The photooxidation reaction refers to a phenomenon in which, when hydroxyl radicals (OH) or singlet oxygen ($^1O_2$) are produced from oxygen ($O_2$) or moisture ($H_2O$) on the surface of an organic product or an inorganic product due to the effects of electromagnetic radiation such as sunlight or the like, electrons ($e^-$) are withdrawn from the aforementioned organic or inorganic product to thereby oxidize it. Due to the aforementioned oxidation, in the organic product, the molecular structure changes, so that discoloration or embrittlement which is referred to as deterioration is observed; in the inorganic product, and in particular, a metal, rust occurs. The surface of the "oxidized" organic product or inorganic product is thus positively charged by the withdrawal of the electrons ($e^-$).

In the present invention, positive charges are present on the surface of the substrate or in the surface layer of the substrate. For this reason, the aforementioned organic product or inorganic product can be naturally desorbed from the surface of the substrate by means of electrostatic repulsion. In the present invention, by means of the electrostatic repulsion which the substrate provides, the aforementioned contaminants can be removed from the substrate or adhesion of the aforementioned contaminants to the substrate can be prevented or reduced.

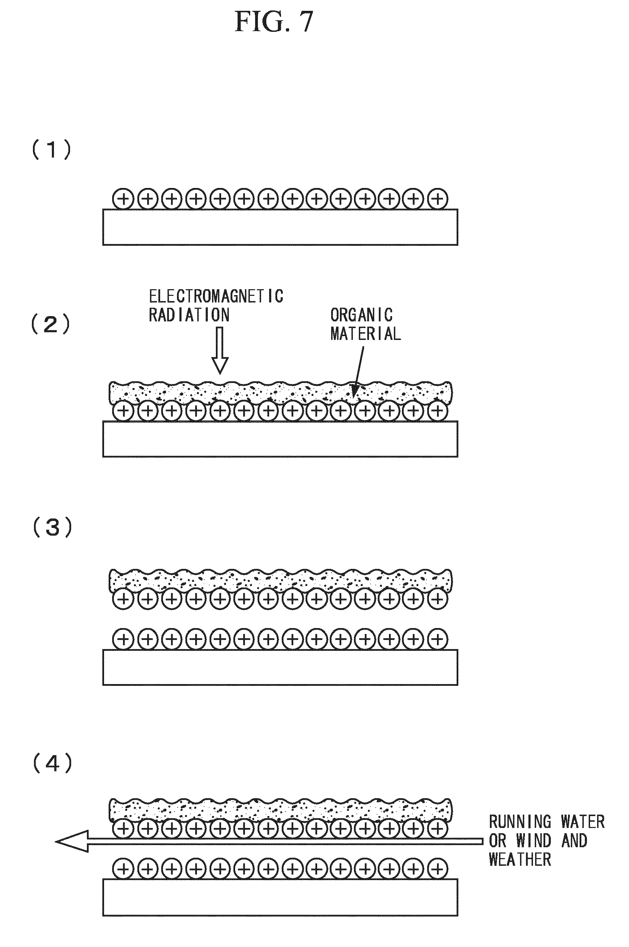

The mechanism of removing contaminants from the surface of the substrate which is positively charged is shown in FIG. 7.

In the mode shown in FIG. 7, by arranging the aforementioned positively-charged substance on the surface of the substrate or in the surface layer of the substrate, positive charges are provided on the surface of the substrate (FIG. 7 (1)).

Contaminants are deposited on the surface of the substrate, and photooxidized by means of electromagnetic radiation such as sunlight and the like. Thereby, positive charges are also provided to the contaminants (FIG. 7 (2)).

Electrostatic repulsion of positive charges between the surface of the substrate and the contaminants is produced, and repulsion power is produced on the contaminants. Thereby, the fixing power of the contaminants to the surface of the substrate is reduced (FIG. 7 (3)).

By means of physical effects such as wind and weather, the contaminants are easily removed from the substrate (FIG. 7 (4)). Thereby, the substrate can self-clean.

By providing positive charges to the surface of the substrate as described above, adhesion of contaminants, which are positively charged, to the surface of the substance can be prevented. However, on the other hand, in the contaminants, materials which are negatively charged, such as chloride ion and the like in tap water, materials which are at first positively charged, but then negatively charged due to mutual interaction (friction or the like) with other substances and the like, such as pollens, algal fungi and the like, are present. The aforementioned contaminants which are negatively charged are easily adsorbed on the surface of the substrate which is positively charged. Therefore, the aforementioned surface of the substrate may also have both positive charges and negative charges. Thereby, adherence of the contaminants having negative charges to the surface of the substrate can be prevented.

In addition, in the case of contaminants composed of insulators having relatively reduced amounts of positive charges or negative charges (such as a silicone oil), depending on the types of the aforementioned contaminants, when only strong positive or negative charges are present on the surface of the substrate, the surface charge of the aforementioned contaminants is reversed. As a result, the aforementioned contaminants may be adhered to the surface of the aforementioned substrate. For this reason, by coexisting both positive charges and negative charges, the aforementioned adhesion can be prevented.

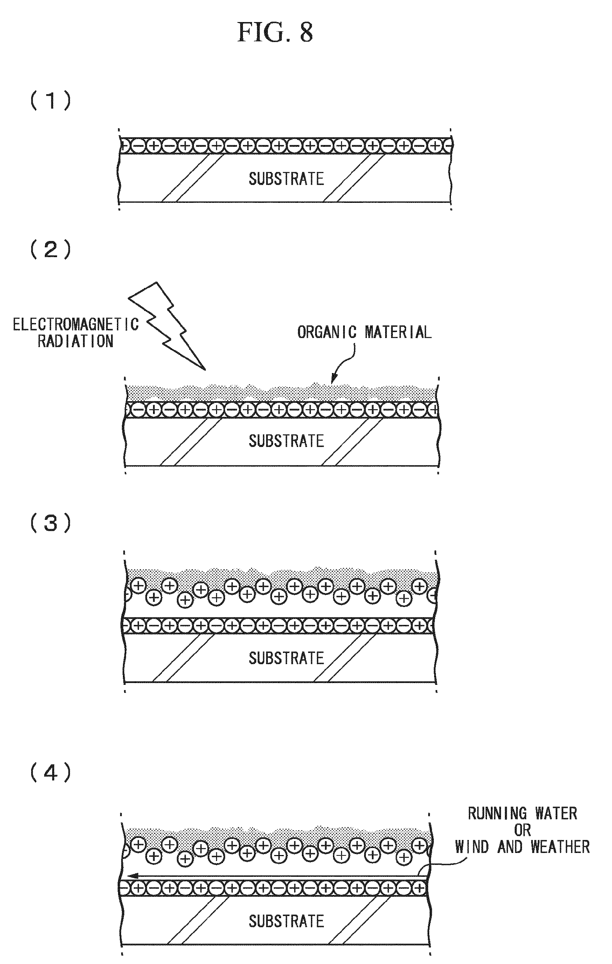

A mechanism of removal of contaminants from the surface of the substrate which is positively and negatively charged is shown in FIG. 8.

In the mode shown in FIG. 8, by arranging the aforementioned negatively-charged substance and the aforementioned positively-charged substance on the surface of the substrate or in the surface layer of the substrate, positive charges and negative charges are provided (FIG. 8 (1)).

Contaminants are deposited on the surface of the substrate, and then continuously photooxidized by means of the effects of electromagnetic radiation such as sunlight or the like. Thereby, positive charges are also provided to the contaminants (FIG. 8 (2)).

Electrostatic repulsion of positive charges between the surface of the substrate and the contaminants is produced, and a repulsion desorption power acts on the contaminants. Thereby, the fixing power of the contaminants to the surface of the substrate can be reduced (FIG. 8 (3)).

By means of physical effects such as wind and weather, the contaminants are easily removed from the surface of the substrate (FIG. 8 (4)). Thereby, the substrate can self-clean.

In addition, since there are negative charges as well on the surface of the substrate, contaminants or contaminant-inducing substances having negative charges such as kaolin clay powder, chloride ions or the like can also be repelled and the fixing power thereof to the surface of the substrate can be reduced.

The method for arranging the positively-charged substance, or the positively-charged substance and the negatively-charged substance, on the surface of the substrate or in the surface layer of the substrate is not particularly restricted. A method in which the positively-charged substance, or the positively-charged substance and the negatively-charged substance, can be arranged in the form of a layer is preferable, and in particular, it is preferable that a layer of a metal-doped titanium oxide be formed on the surface of the substrate.

As the aforementioned metal, at least one metal element selected from the group consisting of gold, silver, platinum, copper, zirconium, tin, manganese, nickel, cobalt, iron, and zinc is preferable. At least two metal elements thereof are preferable, and in particular, silver or tin, as well as copper or iron is preferable. As the titanium oxide, various titanium oxides and titanium peroxide, such as $TiO_2$, $TiO_3$, $TiO$, $TiO_3/nH_2O$ and the like, can be used. In particular, titanium peroxide having a peroxy group is preferable. The titanium oxide may be in any form of amorphous-type, anatase-type, brookite-type, and rutile-type, and these forms may be combined. Amorphous-type titanium oxide is preferable.

Amorphous-type titanium oxide does not have photocatalytic effects. In contrast, anatase-type, brookite-type, and rutile-type titanium oxides exhibit photocatalytic effects, but if copper, manganese, nickel, cobalt, iron or zinc, at a certain concentration or more, is compounded therewith, the aforementioned photocatalytic effects are lost. Therefore, the aforementioned metal-doped titanium oxides exhibit no photocatalytic effects. Amorphous-type titanium oxide can be converted into anatase-type titanium oxide over time by means of heating by sunlight, or the like. However, when copper, zirconium, tin, manganese, nickel, cobalt, iron or zinc is compounded therewith, the aforementioned photocatalytic effects of the anatase-type titanium oxide are lost. As a result, the aforementioned metal-doped titanium oxide exhibits no photocatalytic effects over time. On the other hand, titanium oxides in which gold, silver or platinum is doped show photocatalytic properties when the titanium oxides are converted from amorphous-type to anatase-type. However, when a certain amount or more of the positively-charged substance coexists therewithin, photocatalytic properties are not exhibited. Thus, the aforementioned metal-doped titanium oxides exhibit no photocatalytic effects over time.

As a method for manufacturing the aforementioned metal-doped titanium oxide forming a layer containing a positively-charged substance, or a positively-charged substance and a negatively-charged substance, a manufacturing method based on a hydrochloric acid method or sulfuric acid method which is a general method for manufacturing titanium dioxide powders may be employed, or a manufacturing method using any of various liquid-dispersed titania solutions may be used. The aforementioned metal can form a composite with titanium oxide in any step of the manufacturing method.

First Manufacturing Method

First, a compound of tetravalent titanium such as titanium tetrachloride or the like and a base such as ammonia or the like are reacted together to form titanium hydroxide. Subsequently, the aforementioned titanium hydroxide is peroxidized with an oxidizing agent to form ultra-fine particles of amorphous-type titanium peroxide. The aforementioned reaction is preferably carried out in an aqueous medium. In addition, if a heating treatment is further carried out, the amorphous-type titanium peroxide can be converted into anatase-type titanium peroxide. In one of the aforementioned steps, at least one of gold, silver, platinum, tin, copper, zirconium, manganese, nickel, cobalt, iron, zinc, and compounds thereof is mixed therein.

The oxidizing agent for use in peroxidation is not particularly restricted. Various oxidizing agents can be employed as long as a peroxide of titanium, that is, titanium peroxide, can be produced. Hydrogen peroxide is preferable. In the case of employing an aqueous solution of hydrogen peroxide as an oxidizing agent, the concentration of hydrogen peroxide is not particularly restricted. A concentration thereof ranging from 30% to 40% is preferable. Before the peroxidation reaction is carried out, titanium hydroxide is preferably cooled. The cooling temperature preferably ranges from 1°C to 5°C.

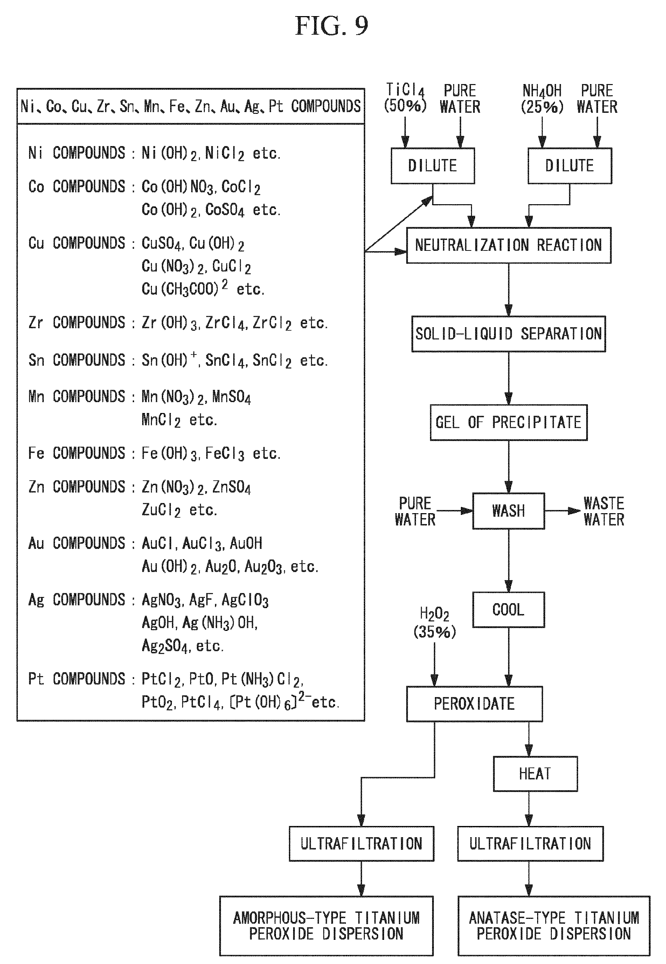

One example of the aforementioned first manufacturing method is shown in FIG. 9. In the manufacturing method shown therein, an aqueous solution of titanium tetrachloride and aqueous ammonia are mixed together in the presence of at least one of gold, silver, platinum, copper, zirconium, tin, manganese, nickel, cobalt, iron, zinc, and compounds thereof and thereby a mixture of a hydroxide of the aforementioned metal and a hydroxide of titanium is produced. Here, there are no particular limitations on the concentration or temperature of the reaction mixture, but the reaction is preferably carried out in a dilute solution at room temperature. The aforementioned reaction is a neutralization reaction, and therefore, it is preferable that the pH of the reaction mixture finally be adjusted to approximately pH 7.

The hydroxides of the metal and titanium obtained above are washed with pure water, followed by cooling to approximately 5°C. Subsequently, the hydroxides are peroxidized with an aqueous solution of hydrogen peroxide. Thereby, an aqueous dispersion containing fine particles of amorphous-type titanium oxide having a peroxy group which contains a metal, i.e. an aqueous dispersion containing a metal-doped titanium oxide, can be produced.

Second Manufacturing Method

A compound of tetravalent titanium such as titanium tetrachloride or the like is peroxidized with an oxidizing agent, and the peroxidized product is reacted with a base such as ammonia or the like to form ultra-fine particles of amorphous-type titanium peroxide. The aforementioned reaction is preferably carried out in an aqueous medium. In addition, by further carrying out a heating treatment, the amorphous-type titanium peroxide can also be converted into anatase-type titanium peroxide. In one of the aforementioned steps, at least one of gold, silver, platinum, copper, zirconium, tin, manganese, nickel, cobalt, iron, zinc, and compounds thereof is mixed therein.

Third Manufacturing Method

A compound of tetravalent titanium such as titanium tetrachloride or the like is reacted together with an oxidizing agent and a base to carry out formation of titanium hydroxide and peroxidation thereof at the same time, and thereby, ultra-fine particles of amorphous-type titanium peroxide are formed. The aforementioned reaction is preferably carried out in an aqueous medium. In addition, by optionally carrying out a heating treatment, the amorphous-type titanium peroxide can also be converted into anatase-type titanium peroxide. In one of the aforementioned steps, at least one of gold, silver, platinum, copper, zirconium, tin, manganese, nickel, cobalt, iron, zinc, and compounds thereof is mixed therein.

In the first to third manufacturing methods, a mixture of the amorphous-type titanium peroxide and the anatase-type titanium peroxide obtained by heating the aforementioned amorphous-type titanium peroxide can be employed as a metal-doped titanium peroxide.

Manufacturing Method Using Sol-Gel Method

A solvent such as water, an alcohol or the like, and an acid or base catalyst are mixed and stirred with a titanium alkoxide to hydrolyze the titanium alkoxide. As a result, a sol solution of ultra-fine particles of titanium peroxide is produced. Before or after the hydrolysis step, at least one of gold, silver, platinum, copper, zirconium, tin, manganese, nickel, cobalt, iron, zinc, and compounds thereof is mixed therein. The titanium peroxide obtained above is an amorphous-type one having a peroxy group.

As the aforementioned titanium alkoxide, a compound represented by the following general formula: $Ti(OR')_4$, wherein R' is an alkyl group, or a compound in which one or two of the alkoxide groups (OR') in the aforementioned general formula have been substituted with carboxyl groups or beta-dicarbonyl groups, or a mixture thereof is preferable.

Specific examples of the aforementioned titanium alkoxide include $Ti(O\text{-}iSO\text{-}C_3H_7)_4$, $Ti(O\text{-}n\text{-}C_4H_9)_4$, $Ti(O\text{-}CH_2CH(C_2H_5)C_4H_9)_4$, $Ti(O\text{-}C_{17}H_{35})_4$, $Ti(O\text{-}iSO\text{-}C_3H_7)_2[CO(CH_3)CHCOCH_3]_2$, $Ti(O\text{-}nC_4H_9)_2[OC_2H_4N\ (C_2H_4OH)_2]_2$, $Ti(OH)_2[OCH(CH_3)COOH]_2$, $Ti(OCH_2CH(C_2H_5)CH(OH)C_3H_7)_4$, $Ti(O\text{-}nC_4H_9)_2(OCOC_{17}H_{35})$, and the like.

Compound of Tetravalent Titanium

As the compound of tetravalent titanium employed in the manufacture of the metal-doped titanium oxide, various titanium compounds can be employed as long as titanium hydroxide, also known as ortho-titanic acid ($H_4TiO_4$), can be formed upon reacting with a base. Examples thereof include titanium salts of water-soluble inorganic acids such as titanium tetrachloride, titanium sulfate, titanium nitrate, and titanium phosphate. Other examples include titanium salts of water-soluble organic acids such as titanium oxalate, or the like. Among the various titanium compounds described above, titanium tetrachloride is preferable since superior water solubility is exhibited, and there are no remaining components other than titanium in the dispersion of a metal-doped titanium peroxide.

In addition, in the case of employing a solution of a compound of tetravalent titanium, the concentration of the aforementioned solution is not particularly restricted as long as a gel of titanium hydroxide can be formed, but a relatively dilute solution is preferable. Specifically, the concentration of the compound of tetravalent titanium preferably ranges from 5% by weight to 0.01% by weight, and more preferably ranges from 0.9% by weight to 0.3% by weight.

Base

As a base to be reacted with the aforementioned compound of tetravalent titanium, various bases can be employed as long as titanium hydroxide can be formed by reacting with the compound of tetravalent titanium. Examples thereof include ammonia, sodium hydroxide, sodium carbonate, potassium hydroxide or the like. Ammonia is preferable.

In addition, in the case of employing a solution of the aforementioned base, the concentration of the aforementioned solution is not particularly restricted as long as a gel of titanium hydroxide can be formed, but a relatively dilute solution is preferable. Specifically, the concentration of the basic solution preferably ranges from 10% by weight to 0.01% by weight, and more preferably ranges from 1.0% by weight to 0.1% by weight. In particular, in the case of employing aqueous ammonia as the basic solution, the concentration of ammonia preferably ranges from 10% by weight to 0.01% by weight, and more preferably ranges from 1.0% by weight to 0.1% by weight.

Metal Compound

As examples of compounds of gold, silver, platinum, copper, zirconium, tin, manganese, nickel, cobalt, iron, and zinc, mention may be made of the compounds described below.

Au compounds: $AuCl$, $AuCl_3$, $AuOH$, $Au(OH)_2$, $Au_2O$, $Au_2O_3$
Ag compounds: $AgNO_3$, $AgF$, $AgClO_3$, $AgOH$, $Ag(NH_3)OH$, $Ag_2SO_4$
Pt compounds: $PtCl_2$, $PtO$, $Pt(NH3)Cl_2$, $PtO_2$, $PtCl_4$, $[Pt(OH)_6]^{2-}$
Ni compounds: $Ni(OH)_2$, $NiCl_2$
Co compounds: $Co(OH)NO_3$, $Co(OH)_2$, $COSO_4$, $CoCl_2$
Cu compounds: $Cu(OH)_2$, $Cu(NO_3)_2$, $CuSO_4$, $CuCl_2$, $Cu(CH_3COO)_2$
Zr compounds: $Zr(OH)_3$, $ZrCl_2$, $ZrCl_4$
Sn compounds: $SnCl_2$, $SnCl_4$, $[Sn(OH)]^+$
Mn compounds: $MnNO_3$, $MnSO_4$, $MnCl_2$
Fe compounds: $Fe(OH)_2$, $Fe(OH)_3$, $FeCl_3$
Zn compounds: $Zn(NO_3)_2$, $ZnSO_4$, $ZnCl_2$

The concentration of titanium peroxide in the aqueous dispersion obtained in accordance with the first to third manufacturing methods (the total amount including coexisting gold, silver, platinum, copper, zirconium, tin, manganese, nickel, cobalt, iron, and zinc) preferably ranges from 0.05 to 15% by weight, and more preferably ranges from 0.1 to 5% by weight. In addition, regarding the content of gold, silver, platinum, copper, zirconium, tin, manganese, nickel, cobalt, iron, or zinc, the molar ratio of titanium and the aforementioned metal component is preferably 1:1 in the present invention. In view of stability of the aqueous dispersion, the ratio preferably ranges from 1:0.01 to 1:0.5, and more preferably ranges from 1:0.03 to 1:0.1.

A step of immersing the substrate in a solution, suspension or emulsion obtained by the aforementioned preparation method to carry out dip coating, or alternatively, applying the aforementioned solution, suspension or emulsion to the substrate by means of a spray, a roll, a brush, a sponge or the like, followed by drying to evaporate the solvent or medium is carried out at least once. Thereby, a layer of the metal-doped titanium oxide can be formed on the surface of the substrate.

In order to promote dispersion of the positively-charged substance, or the positively-charged substance and negatively-charged substance, in the layer, various surfactants or dispersants are preferably blended together therewith. The amount of the surfactants or dispersants may range from 0.001% by weight to 1.0% by weight, and preferably from 0.1% by weight to 1.0% by weight, with respect to the total amount of the positively-charged substance and/or the negatively-charged substance.

As the surfactants or dispersants, various organic silicon compounds can be employed. As the organic silicon compounds, various silane compounds, and various silicone oils, silicone gums, and silicone resins can be employed. One having an alkyl silicate structure or a polyether structure, or one having both an alkyl silicate structure and a polyether structure, in the molecule thereof, is preferable.

Here, the alkyl silicate structure refers to a structure in which alkyl groups are bonded to silicon atoms in the siloxane backbone. On the other hand, as examples of the polyether structure, mention may be made of molecular structures such as polyethylene oxide, polypropylene oxide, polytetramethylene oxide, a block copolymer of polyethylene oxide and polypropylene oxide, a copolymer of polyethylene and polytetramethylene glycol, or a copolymer of polytetramethylene glycol and polypropylene oxide, although there is no limitation thereto. Among these, a block copolymer of polyethylene oxide and polypropylene oxide is particularly suitable in view of the ability to control the wettability by the degree of blocking or the molecular weight.

As the organic compound, a silicone having both an alkylsilicate structure and a polyether structure in the molecule thereof is particularly preferable. Specifically, a polyether-modified silicone such as polyether-modified polydimethylsiloxane or the like is suitable. The polyether-modified silicone can be manufactured using a generally known method, for example, using a method described in Synthesis Example 1, 2, 3 or 4 in Japanese Unexamined Patent Application, First Publication No. H04-242499 or the Reference Example in Japanese Unexamined Patent Application, First Publication No. H09-165318. In particular, a polyethylene oxide-polypropylene oxide block copolymer-modified polydimethylsiloxane obtained by reacting a block copolymer of both-end-metallyl polyethylene oxide-polypropylene oxide with dihydropolydimethylsiloxane is suitable.

Specifically, TSF 4445 or TSF 4446 (both manufactured by GE Toshiba Silicones Co., Ltd.), SH 200, or SH 3746M (manufactured by Dow Corning Toray Silicone Co., Ltd.) KP series (manufactured by Shin-Etsu Chemical Co., Ltd.), DC 3PA or ST 869A (manufactured by Dow Corning Toray Silicone Co., Ltd.) or the like can be employed. They are additives for paints, and can be employed as appropriate, as long as the aforementioned properties can be imparted.

In the layer of the positively-charged substance, or the layer of the positively-charged substance and the negatively-charged substance, various additives such as an IR absorber or reflector, a UV absorber or reflector, and an electromagnetic wave shielding agent may be blended. In this case, the amount of the additive is determined in consideration of the compatibility with the positively-charged substance or the negatively-charged substance.

An intermediate layer may be provided between the substrate and the layer of the positively-charged substance, or the passively-charged substance and the negatively-charged substance. In addition, a coating layer may be provided on the surface of layer of the positively-charged substance, or the layer of the positively-charged substance and the negatively-charged substance.

The aforementioned intermediate layer and the aforementioned coating layer can be formed from various types of organic or inorganic substances which can impart hydrophilic properties or hydrophobic properties or water-repellent properties or oil-repellent properties to the substrate.

As examples of hydrophilic organic substances, mention may be made of polyethers such as polyethylene glycol, polypropylene glycol, a block copolymer formed from polyethylene glycol and polypropylene glycol, and the like; polyvinyl alcohols; polyacrylic acids (including salts such as alkali metal salts, ammonium salts and the like), polymethacrylic acids (including salts such as alkali metal salts, ammonium salts and the like), or a copolymer formed from polyacrylic acid and polymethacrylic acid (including salts such as alkali metal salts, ammonium salts and the like); polyacrylamides; polyvinyl pyrrolidones; hydrophilic celluloses such as carboxymethylcellulose (CMC), methylcellulose (MC), and the like; natural hydrophilic polymer compounds such as polysaccharide and the like; and the like. Composite products formed by blending inorganic dielectrics such as glass fibers, carbon fibers, silica, and the like in the aforementioned polymer materials can also be employed. In addition, as the aforementioned polymer materials, paint materials can also be employed.

As examples of hydrophilic inorganic materials, mention may be made of, for example, $SiO_2$, and other silicon compounds.

As examples of water-repellent organic substances, mention may be made of polyolefins such as polyethylene, polypropylene, polystyrene, and the like; acrylic resins such as polyacrylate, acrylonitrile/styrene copolymer (AS), acrylonitrile/butadiene/styrene copolymer (ABS), and the like; polyacrylonitriles; polyhalogenated vinyls such as polyvinyl chloride, polyvinylidene chloride, and the like; fluorine resins such as polytetrafluoroethylene, fluoroethylene/propylene copolymer, polychlorotrifluoroethylene (PCTFE), polyvinylidene fluoride (PVDF), fluorinated vinylidene/trifluoroethylene copolymer, and the like; polyesters such as polyethylene terephthalate, polycarbonate, and the like; phenolic resins; urea resins; melamine resins; polyimide resins; polyamide resins such as nylon and the like; epoxy resins; polyurethanes; and the like.

As the water-repellent organic substances, fluorine resins are preferable, and in particular, fluorinated vinylidene/trifluoroethylene copolymers having strong dielectric properties and water-repellent properties, β-type crystals of polyvinylidene fluoride, and those containing the same are preferable. As the fluorine resins, commercially available products can be used. As examples of the commercially available products, mention may be made of, for example, HIREC 1550 manufactured by NTT-AT Co., Ltd., and the like.

In addition, a fluorine resin emulsion comprising a surfactant and at least one fluorine resin selected from the group consisting of copolymers formed from two or more types of olefins containing fluorine atoms, copolymers between olefins containing fluorine atoms and hydrocarbon monomers, and mixtures of copolymers formed from two or more types of olefins containing fluorine atoms and thermoplastic acrylic resins, as well as a curing agent (see Japanese Unexamined Patent Application, First Publication No. H05-124880; Japanese Unexamined Patent Application, First Publication No. H05-117578; and Japanese Unexamined Patent Application, First Publication No. H05-179191) and/or a composition comprising the aforementioned silicone resin-based water repellent (see Japanese Unexamined Patent Application, First Publication No. 2000-121543; and Japanese Unexamined Patent Application, First Publication No. 2003-26461) can also be employed. As the aforementioned fluorine resin emulsion, a commercially available product can be used, such as the ZEFFLE series available from Daikin Industries, Ltd., and the LUMIFLON series available from Asahi Glass Co., Ltd. As the aforementioned curing agent, a melamin-based curing agent, an amine-based curing agent, a polyvalent isocyanate-based curing agent, and a block polyvalent isocyanate-based curing agent are preferably employed.

As examples of water-repellent inorganic materials, mention may be made of, for example, silane-based, siliconate-based, silicone-based, or silane composite-based, or fluorine-based water-repellent agents or water absorption inhibitors, and the like. In particular, a fluorine-based water-repellent agent is preferable, and examples thereof include a fluorine-containing compound such as a compound containing a perfluoroalkyl group or the like, or a composition containing a fluorine-containing compound. When a fluorine-containing compound having increased adherence to the surface of the substrate is contained in the intermediate layer, after applying it to the surface of the substrate, it is not always necessary that the chemical components of the water repellent agent or the water-absorption inhibitor react with the substrate, and a chemical bond may be formed, or the chemical components may crosslink with each other.

The fluorine-containing compound which can be employed as the aforementioned fluorine-based water-repellent agent is preferably one containing a perfluoroalkyl group in a molecule and having a molecular weight ranging from 1,000 to 20,000. As examples thereof, mention may be made of perfluorosulfonate, perfluorosulfonic acid ammonium salt, perfluorocarboxylate, perfluoroalkyl betaine, perfluoroalkyl ethylene oxide adduct, perfluoroalkyl amine oxide, perfluoroalkyl phosphate, perfluoroalkyl trimethylammonium salt, and the like. Among these, perfluoroalkyl phosphate and perfluoroalkyl trimethylammonium salt are preferable since they exhibit superior properties of adhering to the surface of the substance. These materials are commercially available as SURFLON S-112 and SURFLON S-121 (both product names, manufactured by Seimi Chemical Co., Ltd.) and the like.

In the case of using a substrate having high water-absorbability, an intermediate layer containing a silane compound is preferably preliminarily formed on the substrate. The intermediate layer includes a large amount of Si-O bonds, and for this reason, it is possible to improve the strength of the layer of the positively-charged substance, or the layer of the positively-charged substance and the negatively-charged substrate, or the adhesiveness with the substrate. In addition, the aforementioned intermediate layer also exhibits a function of preventing moisture from seeping into the substrate.

Examples of the aforementioned silane compounds include a hydrolyzable silane, a hydrolysate thereof, and a mixture of these. As the hydrolyzable silane, various alkoxysilanes can be employed. Examples thereof include a tetraalkoxysilane, an alkyltrialkoxysilane, a dialkyldialkoxysilane, or a trialkylalkoxysilane. Among these, one type of hydrolyzable silane may be employed alone or two or more types of hydrolyzable silanes may be employed in combination. In addition, various organopolysiloxanes may be added to the aforementioned silane compounds. As an agent for forming an intermediate layer containing the silane compound, DRYSEAL S (manufactured by Dow Corning Toray Silicone Co., Ltd.) may be mentioned.

In addition, as the component for forming an intermediate layer, a silicone resin which is curable at room temperature, such as a methylsilicone resin, a methylphenylsilicone resin, or the like may be employed. As examples of a silicone resin which is curable at room temperature, mention may be made of AY42-170, SR2510, SR2406, SR2410, SR2405, and SR2411 (all manufactured by Dow Corning Toray Silicone Co., Ltd.).

The intermediate layer may be a paint film. As the paint material forming the paint film, a so-called paint containing a colorant and a synthetic resin such as an alkyd resin, an acrylic resin, an amino resin, a polyurethane resin, an epoxy resin, a silicone resin, a fluorine resin, an acrylic silicone resin, an unsaturated polyester resin, an ultraviolet-curable resin, a phenol resin, a vinyl chloride resin, or a synthetic resin emulsion can be preferably employed.

The thickness of the aforementioned paint film preferably ranges from 0.01 $\mu$m to 100 $\mu$m, more preferably ranges from 0.1 $\mu$m to 50 $\mu$m, and in particular, preferably ranges from 0.5 $\mu$m to 10 $\mu$m. In addition, as a method for painting, for example, a spray coating method, a dip coating method, a flow coating method, a spin coating method, a roll coating method, a brush coating method, a sponge coating method, or the like can be employed. In addition, in order to improve physical properties such as hardness of the paint film, adhesiveness with the substrate, and the like, heating is preferably carried out within a range acceptable for the substrate and the paint film.

Conventionally, protection of the surface of a substrate was carried out by coating the surface of the substrate with an organic or inorganic substance having superior water-repellent properties or oil-repellent properties, or hydrophilic properties or hydrophobic properties. However, the aforementioned organic or inorganic substance generally possesses negative charges. For this reason, there is a problem in that contaminants adhere to the surface over time and the protective properties thereof are remarkably impaired. In contrast, in the present invention, positive charges are imparted to the surface of the substrate, and for this reason, the problem described above can be eliminated. In addition, while the properties of the organic or inorganic substance are maintained, self-cleaning properties can be imparted, since the chemical properties of the surface of the substrate are not impaired.

Therefore, in the present invention, by utilizing the positive charges provided on the surface of the substrate, a product can be produced in which the functions of removing and stabilizing negatively-charged gases are exhibited and the functions of the substrate itself are exhibited, and at the same time, "functions of preventing contamination and preventing fogging" are exhibited. This technology can be applied to any substrate. In particular, by providing positive charges on the surface of an organic substance having superior water-repellent properties or hydrophilic properties, the functions thereof can be maintained for a long time, and for this reason, application to a painted surface or a substrate formed from plastics is preferable. Thereby, "clean painted surfaces or plastics" can be provided.

At least one part of the surface of the substrate of the present invention preferably has microasperities or microholes in order to have a poly-surface body for increasing an adsorption amount of the negatively-charged gases. In the case in which there are microasperities or microholes on the surface of the substrate, light reflection on the surface of the substrate can be reduced. For this reason, the amount of light transmitted by the aforementioned substrate can increase if the substrate has a light-transmissive part. In the present invention, "light" means electromagnetic waves such as ultraviolet light, visible light, infrared light, and the like. "Visible light" means electromagnetic waves having a wavelength ranging from 380 nm to 780 nm.

The aforementioned microasperities can be formed by applying a reflectivity reducer comprising carbon and/or a thermally-decomposable organic compound, as well as titanium oxide and/or an organic silicon compound and/or an inorganic silicon compound, on the surface of the substrate, followed by heating. In addition, the aforementioned microholes can be formed by applying a reflectivity reducer comprising titanium oxide and/or an organic silicon compound and/or an inorganic silicon compound without carbon and/or a thermally-decomposable organic compound, on the surface of the substrate, followed by drying at room temperature.

"Carbon" used in the present invention means a carbon elementary substance, and can be, for example, in the form of carbon black, graphite, fullerene, carbon nanotube, or India ink. In view of usability, a dispersion in a liquid medium such as India ink is preferable. India ink is a colloid dispersion of carbon particles dispersed by means of a hide glue, and can be used as is. The carbon concentration in India ink can be appropriately specified. "Carbon" used in the present invention may contain impurities such as metal catalysts used at the time of the manufacture thereof, but the aforementioned impurities are preferably reduced.

In the present invention, the thermally-decomposable organic compound is not particularly restricted as long as the compound is an organic compound which can be degraded by heating. The thermally-decomposable organic compound which is degraded by heating to generate a gas is preferable. The heating temperature is preferably 400°C or higher, more preferably 450°C or higher, and further preferably 500°C or higher. As examples of thermally-decomposable organic compounds, mention may be made of, for example, a sugar or sugar alcohol, a water-soluble organic polymer, and a mixture thereof. A sugar or sugar alcohol is preferable, and a sugar is more preferable.

Here, "sugar" means a hydrocarbon having many hydroxyl groups and carbonyl groups, and examples thereof include monosaccharides, disaccharides, oligosaccharides, polysaccharides and the like. As examples of monosaccharides, mention may be made of glucose, fructose, galactose, mannose, ribose, erythrose, and the like. As examples of disaccharides, mention may be made of maltose, lactose, sucrose and the like. As examples of oligosaccharides, mention may be made of fructo-oligosaccharides, galacto-oligosaccharides and the like. As examples of polysaccharides, mention may be made of starch, cellulose, pectin and the like. They may be used alone or in combination. In view of usability, sugars with increased water-solubility are preferable. Therefore, in the present invention, one selected from the group consisting of monosaccharides and disaccharides or a mixture of two or more types thereof is preferably used.

"Sugar alcohol" is a product in which the carbonyl group of a sugar is reduced. As examples of sugar alcohols, mention may be made of, for example, erythritol, threitol, arabinitol, xylitol, ribitol, mannitol, sorbitol, maltitol, inositol, and the like. They may be used alone or as a mixture of two or more types thereof.

As the "water-soluble organic polymer", any thermally-decomposable organic polymers can be used as long as they are soluble in water. As examples thereof, mention may be made of polyether such as polyethylene glycol, polypropylene glycol, polyethylene glycol-polypropylene glycol block copolymer or the like; polyvinyl alcohol; polyacrylic acid (including salts such as alkali metal salts, ammonium salts and the like), polymethacrylic acid (including salts such as alkali metal salts, ammonium salts and the like), polyacrylic acid-polymethacrylic acid (including salts such as alkali metal salts, ammonium salts and the like) copolymer; polyacrylamide; polyvinylpyrrolidone and the like.

The aforementioned water-soluble organic polymer can also function as a solubilizing agent of a sugar or sugar alcohol. For this reason, the water-soluble organic polymer can be blended together with the sugar or sugar alcohol. Thereby, the sugar or sugar alcohol can be dissolved well in the reflectivity reducer.

The concentration of the aforementioned carbon and/or thermally-decomposable organic compound in the aforementioned composition can be suitably varied in accordance with the degree of surface treatment of the substrate. The concentration typically ranges from 0.01% by weight to 15% by weight, preferably ranges from 0.05% by weight to 10% by weight, and more preferably ranges from 1.0% by weight to 5.0% by weight.

As examples of inorganic silicon compounds used in the present invention, mention may be made of silica (silicon dioxide), silicon nitride, silicon carbide, silane and the like, and silica is preferable. As the silica, fumed silica, colloidal silica, precipitated silica or the like can be used, and colloidal silica is preferable. As a commercially available colloidal silica, for example, PL-1 or PL-3 (manufactured by FUSO CHEMICAL CO., LTD.), as a polysilicate, WM-12 (manufactured by TAMA CHEMICALS CO., LTD.), Silica Sol 51 (manufactured by COLCOAT CO., LTD.) or the like can be used.

The concentration of the inorganic silicon compound in the aforementioned composition can be suitably varied in accordance with the degree of surface treatment of the substrate. The concentration typically ranges from 0.01% by weight to 98% by weight, preferably ranges from 0.1% by weight to 90% by weight, and more preferably ranges from 10% by weight to 80% by weight.

The titanium oxide used in the case of imparting optical properties (improvement in transmissive index) in the present invention means an oxide of titanium, and examples thereof include, for example, various titanium monoxide, titanium dioxide, titanium peroxide and the like, such as $TiO_2$, $TiO_3$, $TiO$, $TiO_3/nH_2O$ and the like. In particular, titanium peroxide having a peroxy group is preferable. In addition, the titanium oxide is preferably in the form of fine particles. The titanium oxide may be in any crystalline form of amorphous-type, anatase-type, brookite-type, and rutile-type.

Amorphous-type titanium oxide is preferable. In particular, a mixture of amorphous-type titanium oxide and anatase-type titanium oxide is preferable. As the titanium oxide, commercially available sols of various crystalline types of titanium oxide can be used.

As the titanium oxide, a metal-doped titanium oxide is preferable. As the metal contained in the metal-doped titanium oxide, at least one metal element selected from the group consisting of gold, silver, platinum, copper, zirconium, manganese, nickel, cobalt, tin, iron, zinc, germanium, hafnium, yttrium, lanthanum, cerium, palladium, vanadium, niobium, calcium, and tantalum is preferable. As the metal-doped titanium oxide, a mixture of a commercially available sol of various crystalline types of the titanium oxide and a sol of various types of the metal can be used.

As the metal-doped titanium oxide, in particular, a metal-doped titanium peroxide is preferable. As a method for manufacturing the aforementioned metal-doped titanium peroxide, a manufacturing method based on a hydrochloric acid method or sulfuric acid method which is a general method for manufacturing titanium dioxide powders may be used, or a manufacturing method using any of various liquid dispersion titania solutions may be used. The aforementioned metal can form a composite with titanium peroxide in any step of the manufacturing method.

For example, as examples of manufacturing methods of the aforementioned metal-doped titanium peroxide, mention may be made of the first to third manufacturing methods described above and the sol-gel method.

The reflectivity reducer used in the present invention preferably contains anatase-type titanium peroxide together with the amorphous-type titanium peroxide obtained as described above. As the anatase-type titanium peroxide, one in which amorphous-type titanium peroxide is transferred to anatase-type titanium peroxide by heating (typically, after application to the surface of a light-transmissive substrate) may be used, but one in which amorphous-type titanium peroxide is not transferred to anatase-type titanium peroxide by heating is preferable. Namely, the anatase-type titanium peroxide contained in the reflectivity reducer may be one formed in *situ* by transferring a part of amorphous-type titanium peroxide by heating, but one in which at least one part (preferably the whole part) thereof is independently added from the outside is preferable.

The concentration of titanium oxide in the aforementioned reflectivity reducer can be changed in accordance with the degree of surface treatment of the substrate. The concentration typically ranges from 0.01% by weight to 90% by weight, preferably ranges from 0.1% by weight to 50% by weight, and more preferably ranges from 1% by weight to 20% by weight.

The reflectivity reducer of the present invention can further contain an organic silicon compound. As examples of the organic silicon compound, mention may be made of, for example, various types of organic silane compounds and silicones such as silicone oils, silicone gums, silicone resins and the like. They may be used alone or as a mixture thereof. As the silicones, one having an alkyl silicate structure or a polyether structure, or one having both an alkyl silicate structure and a polyether structure, in the molecule thereof, is preferable. Here, the alkylsilicate structure refers to a structure in which alkyl groups are bonded to silicon atoms in the siloxane backbone. On the other hand, the polyether structure refers to a structure having an ether bond. As examples of the polyether structure, mention may be made of molecular structures such as polyethylene oxide, polypropylene oxide, polytetramethylene oxide, a block copolymer of polyethylene oxide and polypropylene oxide, a copolymer of polyethylene and polytetramethylene glycol, or a copolymer of polytetramethylene glycol and polypropylene oxide. Among these, a block copolymer of polyethylene oxide and polypropylene oxide is particularly suitable in view of controllability of the wettability on the surface of the substrate by the degree of blocking or the molecular weight.

As an organic silicon compound, a silicone having both an alkylsilicate structure and a polyether structure in the molecule thereof is particularly preferable. Specifically, a polyether-modified silicone such as polyether-modified polydimethylsiloxane or the like is suitable. The polyether-modified silicone can be manufactured using a generally known method, for example, using a method described in Synthesis Example 1, 2, 3 or 4 in Japanese Unexamined Patent Application, First Publication No. H04-242499 or the Reference Example in Japanese Unexamined Patent Application, First Publication No. H09-165318. In particular, a polyethylene oxide-polypropylene oxide block copolymer-modified polydimethylsiloxane obtained by reacting a block copolymer of both-end-metallyl polyethylene oxide-polypropylene oxide with dihydropolydimethylsiloxane is suitable. Specifically, TSF4445 or TSF4446 (both manufactured by GE Toshiba Silicones Co., Ltd.), KP series (manufactured by Shin-Etsu Chemical Co., Ltd.), SH200, SH3746M, DC3PA or ST869A (all manufactured by Dow Corning Toray Silicone Co., Ltd.) or the like can be employed.

The concentration of the organic silicon compound in the aforementioned composition can be suitably varied in accordance with the degree of surface treatment of the substrate. The concentration typically ranges from 0.01% by weight to 5.0% by weight, preferably ranges from 0.05% by weight to 2.0% by weight, and more preferably ranges from 0.1% by weight to 1.0% by weight.

The reflectivity reducer for improving optical properties used in the present invention preferably contains an aqueous medium which is water, alcohol or a mixture thereof, or a non-aqueous medium such as an organic solvent or the like. In view of dispersibility of carbon and solubility of thermally-decomposable organic compounds, the reflectivity reducer of the present invention preferably contains the aqueous medium. The concentration of the medium typically ranges from 50% by weight to 99.9% by weight, preferably ranges from 60% by weight to 99% by weight, and more preferably ranges from 70% by weight to 97% by weight.

The reflectivity reducer comprising carbon and/or the thermally-decomposable organic compound used in the present invention is applied to the surface of the substrate and then heated. Thereby, the reflectivity of the surface of the substrate is reduced, and light transmittance is improved. The application means or application methods of the reflectivity reducers are not particularly limited, and any means and method can be used. For example, any application method such as a dip coating method, a spray coating method, a roll coating method, a spin coating method, a sponge coating method or the like can be used.

The aforementioned heating is not particularly limited as long as the heating is carried out at not less than a temperature which makes carbon eject as carbon dioxide gas or causes decomposition of the thermally-decomposable organic compound in the reflectivity reducer. In the case in which the thermally-decomposable organic compound is a sugar or sugar alcohol, or is a water-soluble organic polymer, not less than the temperature at which a decomposed gas such as moisture vapor, carbon dioxide gas or the like is generated is preferable, and not less than 400°C is more preferable, not less than 450°C is furthermore preferable, and not less than 500°C is furthermore preferable. The upper limit of the heating temperature is not particularly limited. In view of the effects on various properties of the substrate, not more than 1,000°C is preferable, not more than 850°C is more preferable, and not more than 800°C is furthermore preferable. The heating period is not particularly limited as long as carbonization of the thermally-decomposable organic compound can be sufficiently carried out. The heating period preferably ranges from one minute to 3 hours, more preferably ranges from one minute to one hour, and furthermore preferably ranges from one minute to 30 minutes.

In the case of the presence of titanium peroxide in the reflectivity reducer, titanium peroxide changes to titanium oxide (titanium dioxide) by heating. At this time, amorphous-type titanium oxide is transferred to anatase-type titanium oxide (in general, amorphous-type titanium oxide is transferred to anatase-type titanium oxide by heating for two or more hours at 100°C). Therefore, in the case in which amorphous-type titanium peroxide is contained in the reflectivity reducer of the present invention, anatase-type titanium oxide obtained by the process of amorphous-type titanium peroxide → amorphous-type titanium oxide → anatase-type titanium oxide is present on the surface of the substrate. In addition, in the case in which anatase-type titanium peroxide is already contained in the aforementioned reflectivity reducer, it changes to anatase-type titanium oxide, as is, by heating.

On the surface of the substrate which is heat-treated, a porous layer having plural microasperities on the surface thereof is formed by ejection of carbon as carbon dioxide gas in the reflectivity reducer or ejection of decomposed products (such as moisture vapor, carbon dioxide gas and the like) derived from the thermally-decomposable organic compound. By virtue of the aforementioned microasperities, the reflectivity of the surface of the substrate is reduced. As a result, the light transmittance of the substrate is improved. The average layer thickness of the aforementioned porous layer is not particularly limited as long as the transmittance of the substrate is improved. The average layer thickness preferably ranges from 0.05 to 0.3 $\mu$m (50 to 300 nm), more preferably ranges from 80 to 250 nm, furthermore preferably ranges from 100 to 250 nm, and in particular, preferably ranges from 120 to 200 nm.

The surface of the aforementioned porous layer preferably has a surface roughness with a maximum height ($R_{max}$) of not more than 50 nm, and the maximum height is more preferably not more than 30 nm. The porous layer is formed from the substrate face, and the depth of the holes may be the same as the thickness of the layer or may be the same as the thickness of the surface layer. Due to the presence of plural microasperities, the reflectivity on the surface of the substrate is reduced. As a result, the light transmissivity of the aforementioned substrate is improved. The particle size of titanium oxide contained in the porous layer preferably ranges from 1 nm to 100 nm, more preferably ranges from 1 nm to 50 nm, and furthermore preferably ranges from 1 nm to 20 nm.

On the other hand, in the case of the reflectivity reducer comprising titanium oxide and/or an organic silicon compound and/or an inorganic silicon compound without carbon and/or a thermally-decomposable organic compound, heating at a high temperature (400°C or higher) after applying the reflectivity reducer to the surface of the substrate is not required. Therefore, after applying the reflectivity reducer to the surface of the substrate, drying at a temperature higher than room temperature (less than 300°C), and thereby, microholes can be formed on the surface of the substrate by deposited products of particles of each of titanium oxide and/or the organic silicon compound and/or the inorganic silicon compound. The size and/or shape of the holes can be controlled by appropriately adjusting the particle size of each particle of titanium oxide and/or the organic silicon compound and/or the inorganic silicon compound. Thereby, a substrate having an increased surface area and having a high light transmissive property can be obtained.

In the present invention, microasperities or microholes are formed on the surface of the substrate, not by means of an etching treatment or the like, but by forming a thin porous layer on the surface thereof. For this reason, it is not necessary to subject the substrate itself to microprocessing, and it is easy to form asperities or holes. In addition, the reflectivity reducer which is a precursor of the porous layer is applied to the surface of the substrate. For this reason, the surface of the substrate can be treated over a wide range, and even in the case of a substrate having a curved surface such as a lens, asperities or holes can be easily formed.

Therefore, in the mode of the present invention, it is possible to increase the surface area and at the same time, reduce the reflectivity of the substrate in order to increase the amount of the negatively-charged gases adsorbed by the substrate by a simple method which is applicable regardless of materials and forms of the substrate. Thereby, a substrate in which the transmittance is increased and the optical properties are improved, as well as a low reflectivity is exhibited can be provided.

In the reflectivity reducer used in the present invention, in addition to the aforementioned components, various positively-charged substances, negatively-charged substances, or mixtures thereof can be blended. Thereby, contamination of the surface of the substrate can be prevented or reduced, and for this reason, protection of the substrate, as well as, adsorption and/or desorption of negatively-charged gases, stability of the negatively-charged gases, and a low reflective property can be maintained for a long period of time.

In addition, the aforementioned positively-charged substances, negatively-charged substances, or mixtures thereof make the surface of the substrate hydrophilic. For this reason, formation of water droplets on the surface of the substrate can be prevented or reduced. Therefore, reduction of light transmittance caused by inflection and diffuse reflection due to water droplets on the surface of the substrate can be prevented.

In the aforementioned mode of the present invention, an intermediate layer may be formed between the aforementioned porous layer and the surface of the substrate. The aforementioned intermediate layer can be formed from various types of organic or inorganic substances which can impart hydrophilic properties or hydrophobic properties or water repellent properties or oil-repellent properties to the substrate.

INDUSTRIAL APPLICABILITY

According to the present invention, negatively-charged gas molecules can be removed without using artificial energy. For this reason, the present invention can be utilized in any field in which removal or detoxification of negatively-charged gas molecules is required. The present invention is suitably employed in many artificial materials utilized outside, such as building materials; outdoor air conditioners; kitchen instruments; hygiene instruments; lighting apparatuses; automobiles; bicycles; two-wheeled motor vehicles; airplanes; trains; boats and ships; or the like, or face panels of various machines, electronics, televisions, or the like, manufactured from glass, metals, ceramics, concrete, timber, stone materials, polymer resin covers, polymer resin sheets, fibers (clothes, curtains, and the like), sealants, or the like, or a combination thereof. In particular, the present invention is preferably employed in building materials used outdoors. Architectural structures such as houses, buildings, roads, tunnels, or the like, manufactured by employing the aforementioned building materials, can exhibit superior effects over time.

In addition, the substrate obtained in the present invention is, in particular, useful as a component for an apparatus in which improvements in light transmittance and reduction of reflectivity are required. For example, the substrate can be used in a face glass of a photocell such as a solar cell, a face glass of various types of displays such as a liquid crystal display, a plasma display, an organic EL display, or a tube television; an optical element such as a lens; a construction member such as window glass; as well as various types of an optical receiver, an illuminator, a projector, a polarization glass, an optical glass and the like. In particular, in the case of using the substrate in a face glass of a photocell such as a solar cell used outdoors, or the surface of a reflecting mirror of a thermal cell, reduction of carbon dioxide, air purification, and low reflective properties can also contribute to improvements in efficiency of power generation.

EXAMPLES

Hereinafter, the present invention is described in detail with reference to examples. It should be understood that the present invention is not restricted to these examples.

Preparation of Evaluation Liquid 1 (Positively-charged film-forming liquid: Dispersion liquid of a compound of a conductor and a dielectric)

0.463 g of 97% $CuCl_2/2H_2O$ (cupric chloride) (manufactured by Nihon Kagaku Sangyo Co., Ltd.) was completely dissolved into 500 ml of pure water. To the aforementioned solution, 10 g of a 50% solution of titanium (IV) tetrachloride (manufactured by Sumitomo Sticks Co., Ltd.) was added, and pure water was further added until the solution reached 1,000 ml. Aqueous ammonia which had been prepared by 10 times dilution of 25% aqueous ammonia (manufactured by Takasugi Pharmaceutical Co., Ltd.) was added dropwise thereto in order to adjust the pH thereof to 7.0. Thereby, a mixture of copper hydroxide and titanium hydroxide was precipitated. The precipitate was washed with pure water until the conductivity of the supernatant fluid became 0.8 mS/m or less. Washing was ended when the conductivity became 0.80 mS/m. Thereby, 340 g of hydroxides with a concentration of 0.81% by weight was obtained.

Subsequently, while the aforementioned liquid was cooled to 12°C, 25 g of a 35% aqueous solution of hydrogen peroxide (manufactured by Taiki Yakuhin Kogyo Co., Ltd.) was added thereto. The mixture was stirred for 16 hours. Thereby, 365 g of a clear green solution of copper-doped amorphous-type titanium peroxide with a concentration of 0.90% by weight was obtained. The aforementioned solution was diluted with pure water. Thereby, 385 g of a 0.85% by weight dispersion of copper as a conductor and an amorphous-type titanium peroxide as a dielectric was prepared, and was used as Evaluation Liquid 1.

Preparation of Evaluation Liquid 2 (Positively-charged porous film-forming liquid)

A refined soft sugar (commercially available product), in an amount of 2% by weight, and an organic silicon surfactant: Z-B (manufactured by SUSTAINABLE TITANIA TECHNOLOGY INC.), in an amount of 20% by weight, were added to the aforementioned Evaluation Liquid 1 (385 g). Thereby, Evaluation Liquid 2 was prepared.

Preparation of Evaluation Liquid 3 (Amphoterically-charged film-forming liquid)

20 g of a 50% solution of titanium (IV) tetrachloride (manufactured by Sumitomo Sticks Co., Ltd.) was added to 1,000 ml of pure water, and pure water was further added until the total amount of the solution reached 2,000 ml. Aqueous ammonia which had been prepared by 10 times dilution of 25% aqueous ammonia (manufactured by Takasugi Pharmaceutical Co., Ltd.) was added dropwise thereto in order to adjust the pH thereof to 7.0. Thereby, a mixture of titanium hydroxides was precipitated. The precipitate was washed with pure water until the conductivity of the supernatant fluid became 0.8 mS/m or less. Washing was ended when the conductivity became 0.702 mS/m. Thereby, 860 g of hydroxide with a solid content concentration of 0.73% by weight was obtained.

Subsequently, the obtained liquid was cooled to between 1°C and 5°C, and was stirred for 16 hours after adding 50 g of a 35% aqueous solution of hydrogen peroxide (manufactured by Taiki Yakuhin Kogyo Co., Ltd.). Thereby, 905 g of a clear pale yellow brown solution of amorphous-type titanium peroxide with a solid content concentration of 0.86% by weight was obtained. 100 g of the aforementioned amorphous-type titanium peroxide solution was collected, 2.0 g of an aqueous solution of silver nitrate adjusted to be 0.5 mole/liter was added thereto, and the mixture was stirred. Thereby, 102 g of a clear yellow dispersion of amorphous-type titanium peroxide in which silver nitrate was dispersed was prepared. Subsequently, the aforementioned Evaluation Liquid 1 and the aforementioned silver-doped amorphous-type titanium peroxide were mixed in a ratio of 1:1. Thereby, 204 g of a copper (positively-charged substance) and silver (negatively-charged substance)-doped amorphous-type titanium peroxide was prepared and used as Evaluation Liquid 3.

Preparation of Evaluation Liquid 4 (Amphoterically-charged porous film-forming liquid)

A refined soft sugar (commercially available product), in an amount of 2% by weight, and an organic silicon surfactant: Z-B (manufactured by SUSTAINABLE TITANIA TECHNOLOGY INC.), in an amount of 20% by weight, were added to the aforementioned Evaluation Liquid 3. Thereby, Evaluation Liquid 4 was prepared.

Preparation of Evaluation Liquid 5 (highly-transmissive and/or anti-contamination amphoterically-charged porous film-forming liquid)

An aqueous dispersion of copper and zirconium (positively-charged substance)-doped titania (amorphous-type titanium peroxide): Z 18-1000 Super A (manufactured by SUSTAINABLE TITANIA TECHNOLOGY INC.) (concentration adjusted to 0.6% by weight), an aqueous dispersion of anatase-type titanium peroxide (negatively-charged substance) (B 51 (manufactured by SUSTAINABLE TITANIA TECHNOLOGY INC.)) (concentration adjusted to 0.6% by weight), and a polysilicate (WM-12 (manufactured by TAMA CHEMICALS CO., LTD.)) were mixed in a weight ratio of 1:1:8. An aqueous dispersion of an organic silicon compound (Z-B (manufactured by SUSTAINABLE TITANIA TECHNOLOGY INC.)), in an amount of 10% by weight, and a commercially available white superior soft sugar, in an amount of 1% by weight, were added to the aforementioned mixture. Thereby, Evaluation Liquid 5 was prepared.

Preparation of Evaluation Liquid 6 (amphoterically-charged anti-contamination highly-transmissive film-forming liquid)

1.188 g of $SnCl_2/2H_2O$ (tin (II) chloride) was completely dissolved into 1,000 g of pure water. To the aforementioned solution, 20 g of a 50% solution of titanium (IV) tetrachloride (manufactured by Sumitomo Sticks Co., Ltd.) was added, and pure water was further added until the total amount of the solution reached 2,000 g. Aqueous ammonia which had been prepared by 10 times dilution of 25% aqueous ammonia (manufactured by Takasugi Pharmaceutical Co., Ltd.) was added dropwise thereto in order to adjust the pH thereof to 7.0. Thereby, a mixture of tin hydroxide and titanium hydroxide was precipitated. The precipitate was washed with pure water until the conductivity of the supernatant fluid became 0.8 mS/m or less. Washing was ended when the conductivity became 0.713 mS/m. Thereby, 834 g of hydroxides with a concentration of 0.51% by weight was obtained. Subsequently, the aforementioned liquid was cooled to between 1 and 5°C, and was stirred for 16 hours after adding 56 g of 35% aqueous solution of hydrogen peroxide (manufactured by Taiki Yakuhin Kogyo Co., Ltd.) thereto. Thereby, 878 g of a clear yellowish brown solution of tin (negatively-charged substance)-doped amorphous-type titanium peroxide was obtained.

The aforementioned obtained solution, an aqueous dispersion of copper (positively-charged substance)-doped titania (amorphous-type titanium peroxide): Z 18-1000 Super A (manufactured by SUSTAINABLE TITANIA TECHNOLOGY INC.) (concentration adjusted to 0.6% by weight), and a polysilicate (WM-12 (manufactured by TAMA CHEMICALS CO., LTD.)) were mixed in a weight ratio of 1:1:8. Z-B (manufactured by SUSTAINABLE TITANIA TECHNOLOGY INC.)), in an amount of 10% by weight, was added to the aforementioned mixture. Thereby, Evaluation Liquid 6 was prepared.

Evaluation 1: $CO_2$ adsorption ability of each functional film

Preparation of evaluation substrates Each of Evaluation Liquids 1 to 5 was directly sprayed to an inner part of a commercially-available glass bottle (volume = 615 cc, and surface area = 430 cm$^2$) so that a dried film had a thickness ranging from 100 nm to 120 nm, followed by heating for 15 minutes at 550°C in an electric kiln. Thereby, Evaluation Substrates 1 to 5 in which the functional films were independently formed were prepared.

A commercially available candle (height = 5 cm, and diameter = 7.5 mm) which was lighted was housed in a glass container (with a lid) of each of Evaluation Substrates 1 to 5 and film-unformed substrate. The period until the candle flame waned was measured, and thereby, the $CO_2$ adsorption ability of the substrate on the basis of candle combustion was measured. The glass container was washed with pure water after every completion of the measurement, and then dried. The evaluation was repeated three times. The average periods are shown in Table 1.

Table 1

|  | Evaluation Substrate 1 | Evaluation Substrate 2 | Evaluation Substrate 3 | Evaluation Substrate 4 | Evaluation Substrate 5 | No film formed |
|---|---|---|---|---|---|---|
| Period for extinguishing fire (sec.) | 20.52 | 21.32 | 21.09 | 22.59 | 22.41 | 17.53 |

From the results shown in Table 1, the order of the lighting period in the Evaluation Substrate was Evaluation Substrate 5 > Evaluation Substrate 4 > Evaluation Substrate 2 > Evaluation Substrate 3 > Evaluation Substrate 1 > no film formed substrate. The condition of extinguishing fire may be absence of oxygen and at the same time, fullness of carbon dioxide. Therefore, the substrate in which the period of extinguishing fire is increased may have the surface of the formed film exhibiting an increased adsorption ability of carbon dioxide.

Evaluation 2: Evaluation for stable gas-treating ability of negatively-charged gas

Preparation of evaluation substrate

Each of Evaluation Liquids 1 to 5 was applied to a commercially available white porcelain tile (100 mm X 100 mm) by spray coating so that a dried film had a thickness ranging from 100 nm to 120 nm, followed by heating for 15 minutes at 550°C by means of an electric kiln. The same tile which had not been subjected to film forming was used as a control. A commercially available red ink (manufactured by PILOT CORPORATION) was diluted by a factor of 20 with pure water and then applied to each substrate of which the temperature returned to room temperature, by means of a spray gun with an application amount of 20 g/m$^2$ (wet condition), followed by drying at room temperature. Thereby, Evaluation Substrates 1 to 5 and Control Substrate (no film formed) were produced.

Evaluation Substrates 1 to 5 and Control Substrate were arranged in parallel in a dark room, under a 15 W black light (manufactured by PANASONIC ELECTRIC WORKS CO., LTD.), and were exposed to ultraviolet radiation with an intensity of 1,400 $\mu$w/cm$^2$. The exposure was continued for 6 hours. Evaluation of fading of the red color was carried out by means of calorimeter CR-200 (manufactured by MINOLTA INC.). The results are shown in Table 2.

Table 2

|  | 0 hours | After 2 hours | After 3 hours | After 4 hours | After 5 hours | After 6 hours |
|---|---|---|---|---|---|---|
| Fading rate (Evaluation Substrate 1) | 0 | 1.2 | 1.9 | 2.8 | 4.1 | 5.0 |

(continued)

|  | 0 hours | After 2 hours | After 3 hours | After 4 hours | After 5 hours | After 6 hours |
|---|---|---|---|---|---|---|
| Fading rate (Evaluation Substrate 2) | 0 | 1.1 | 1.9 | 2.7 | 3.9 | 4.7 |
| Fading rate (Evaluation Substrate 3) | 0 | 1.5 | 2.2 | 3.6 | 4.9 | 6.0 |
| Fading rate (Evaluation Substrate 4) | 0 | 1.9 | 1.6 | 3.0 | 4.2 | 5.4 |
| Fading rate (Evaluation Substrate 5) | 0 | 0.2 | 0.4 | 0.8 | 1.2 | 1.5 |
| Fading rate (Control Substrate) | 0 | 3.8 | 11.9 | 17.0 | 21.6 | 27.0 |

$$\text{Fading rate} = 100 - \sqrt{((L_2-L_0)^2 + (a_2-a_0)^2 + (b_2-b_0)^2)} / \sqrt{((L_1-L_0)^2 + (a_1-a_0)^2 + (b_1-b_0)^2)} \times 100$$

wherein $L_0$, $a_0$, $b_0$: colorimetric value of each of the substrates before the red ink was applied (based on a CIELAB color space, hereinafter, the same base was applied);

$L_1$, $a_1$, $b_1$: colorimetric value of each of the substrates immediately after the red ink was applied (before ultraviolet irradiation); and

$L_2$, $a_2$, $b_2$: colorimetric value of each of the substrates after ultraviolet irradiation.

Table 2 shows an ability (molecule stabilization) of reducing the production of active radical species such as hydroxyl radicals (˙OH), singlet oxygen ($^1O_2$), $O_2^-$, and the like, causing redox effects, by subjecting water or air to an exposure with ultraviolet radiation. From the results shown in Table 2, it can be seen that the descending order of the fading degree due to oxidation decomposition of the red ink (negatively-charged dye), caused by the radicals produced by decomposing and activating oxygen or adsorbed moisture on the surface of the substrate by ultraviolet radiation is as follows: Evaluation Substrate 5 < Evaluation Substrate 2 < Evaluation Substrate 1 < Evaluation Substrate 4 < Evaluation Substrate 3 < Control Substrate (no film formed). Therefore, it can be seen that as the aforementioned value is decreased, the production of the negatively-charged gases is reduced.

Evaluation 3:

Evaluation of $CO_2$ fixing ability using aqueous saturated solution of $Ca(OH)_2$

Preparation of evaluation substrate

Each of Evaluation Liquids 2 to 6 was directly sprayed to an inner part of a commercially-available glass bottle (volume = 615 cc, and surface area = 430 $cm^2$) so that a dried film had a thickness ranging from 100 nm to 120 nm, followed by heating for 15 minutes at 550°C in an electric kiln, with the proviso that in the case of Evaluation Liquid 6, drying at room temperature was carried out. Thereby, Evaluation Substrates 2 to 6 in which the functional films were independently formed were prepared.

A commercially available candle (height = 5 cm, and diameter = 7.5 mm) which was lighted was housed in a glass container (with a lid) (volume = 615 cc) of each of Evaluation Substrates 2, 3, 5 and 6, as well as the film-unformed substrate (control). The candle in the container was combusted until the candle flame waned during the day outside. After the candle flame waned, the glass bottle was allowed to stand for about 30 minutes to adsorb $CO_2$ by the inner part of each of the substrates. The gas present in each of the containers was subjected to bubbling in 30 g of a saturated aqueous solution of $Ca(OH)_2$ by means of an air pump (aspiration amount = 800 cc/min), and whether or not white calcium carbonate of a binding product with $CO_2$ was produced ($Ca(OH)2 + CO_2 \rightarrow CaCO_3$ (white) + $H_2O$) was tested. The test was repeated four times for evaluation. After every evaluation, the inner part of the container was washed with tap water and ion-exchanged water. In addition, the amount of irradiation light at each of the evaluations was also measured. The evaluation results are shown in Table 3.

Table 3

| Amount of irradiated light | 1,200 $\mu$W/cm$^2$ | 1,850 $\mu$W/cm$^2$ | 1,050 $\mu$W/cm$^2$ | 610 $\mu$W/cm$^2$ |
|---|---|---|---|---|
| Evaluation Substrate 2 | Very slightly cloudy | Transparent | Transparent | Transparent |
| Evaluation Substrate 3 | Slightly cloudy | Faintly cloudy | Faintly cloudy | Faintly cloudy |
| Evaluation Substrate 4 | Slightly cloudy | Slightly cloudy | Slightly cloudy | Slightly cloudy |
| Evaluation Substrate 6 | Very slightly cloudy | Transparent | Transparent | Transparent |
| Control Substrate | Cloudy | Cloudy | Cloudy | Cloudy |

The descending order of a degree of the production of CaCO$_3$ is as follows: Transparent < very slightly cloudy < faintly cloudy < slightly cloudy < cloudy. The aforementioned order is proportional to the amount of CO$_2$ adsorbed by the evaluation substrate. From the results shown in Table 3, it can be seen that the superior ability of fixing CO$_2$ is exhibited in the order of Evaluation Substrate 6 > Evaluation Substrate 2 > Evaluation Substrate 3 > Evaluation Substrate 5 > Control Substrate (film unformed).

**Claims**

1. A method for removing negatively-charged gas molecules, comprising the steps of:

   adsorbing negatively-charged gas molecules by a substrate carrying a positively-charged substance, or a positively-charged substance and a negatively-charged substance, on a surface of the substrate, or in a surface layer of the substrate; and
   desorbing said negatively-charged gas molecules adsorbed on said substrate, from the substrate using a fluid.

2. The method according to Claim 1, wherein said negatively-charged gas molecules are carbon dioxide.

3. A method for detoxifying negatively-charged gas molecules, comprising the steps of:

   adsorbing negatively-charged gas molecules by a substrate carrying a positively-charged substance or a positively-charged substance and a negatively-charged substance on a surface of the substrate or in a surface layer of the substrate;
   removing electrons from said negatively-charged gas molecules adsorbed on said substrate to form neutral gas molecules; and
   desorbing said neutral gas molecules from the substrate.

4. The method according to Claim 3, wherein said negatively-charged gas molecules are oxygen, ozone, halogen gases, fluorine compounds, chlorine compounds, nitrogen oxides, sulfur oxides, or ions thereof.

5. The method according to any one of Claims 1 to 4, wherein said positively-charged substance is one or more substances selected from the group consisting of:

   (1) a positive ion;
   (2) a conductor or dielectric having positive charges; and
   (3) a composite formed from a conductor, and a dielectric or a semiconductor, having positive charges.

6. The method according to any one of Claims 1 to 4, wherein said negatively-charged substance is one or more substances selected from the group consisting of:

   (4) a negative ion;
   (5) a conductor or dielectric having negative charges;
   (6) a composite formed from a conductor, and a dielectric or a semiconductor, having negative charges; and
   (7) a substance having a photocatalytic function.

7. A substrate for removing or detoxifying negatively-charged gas molecules, which carries a positively-charged substance, or a positively-charged substance and a negatively-charged substance, on a surface of the substrate or in the surface layer of the substrate.

8. The substrate according to Claim 7, wherein at least one part of the surface of said substrate has microasperities or microholes.

9. A method for manufacturing the substrate as recited in Claim 8, comprising the steps of:

applying a reflectivity reducer comprising carbon and/or a thermally-decomposable organic compound, as well as titanium oxide and/or an organic silicon compound and/or an inorganic silicon compound, or a reflectivity reducer comprising titanium oxide and/or an organic silicon compound and/or an inorganic silicon compound without carbon and/or a thermally-decomposable organic compound, on a surface of a substrate, followed by heating or drying at room temperature.

10. The substrate according to Claim 7 or Claim 8, wherein at least one part of said substrate is light-transmissive.

11. An optical element, an optical cell, a transportation means or an architecture member, which is equipped with the substrate according to Claim 7, 8, or 10.

FIG. 1

CONDUCTOR          DIELECTRIC          CONDUCTOR
                   OR
                   SEMICONDUCTOR

# FIG. 2

DIELECTRIC
OR
SEMICONDUCTOR

CONDUCTOR
WITH
NEGATIVE
CHARGE

DIELECTRIC
OR
SEMICONDUCTOR

CONDUCTOR
WITH
POSITIVE
CHARGE

# FIG. 3

CONDUCTOR
WITH
NEGATIVE
CHARGE

CONDUCTOR
WITH
POSITIVE
CHARGE

25

# FIG. 4

( 1 )

POSITIVELY-
CHARGED
SUBSTANCE

( 2 )

NEGATIVELY-
CHARGED
GAS

( 3 )

( 4 )

RUNNING WATER
OR WIND AND
WEATHER

# FIG. 5

(1)

POSITIVELY-
CHARGED
SUBSTANCE

NEGATIVELY-
CHARGED
SUBSTANCE

(2)

NEGATIVELY-
CHARGED
GAS

(3)

(4)

RUNNING WATER
OR WIND AND
WEATHER

# FIG. 6

(1)

POSITIVELY-
CHARGED
SUBSTANCE

(2)

(3)

ELECTRON

(4)

# FIG. 7

(1)

(2)

ELECTROMAGNETIC
RADIATION

ORGANIC
MATERIAL

(3)

(4)

RUNNING WATER
OR WIND AND
WEATHER

# FIG. 8

(1)

SUBSTRATE

(2)

ELECTROMAGNETIC
RADIATION

ORGANIC MATERIAL

SUBSTRATE

(3)

SUBSTRATE

(4)

RUNNING WATER
OR
WIND AND WEATHER

SUBSTRATE

# FIG. 9

| Ni, Co, Cu, Zr, Sn, Mn, Fe, Zn, Au, Ag, Pt COMPOUNDS |
| --- |
| Ni COMPOUNDS : $Ni(OH)_2$, $NiCl_2$ etc. |
| Co COMPOUNDS : $Co(OH)NO_3$, $CoCl_2$<br>$Co(OH)_2$, $CoSO_4$ etc. |
| Cu COMPOUNDS : $CuSO_4$, $Cu(OH)_2$<br>$Cu(NO_3)_2$, $CuCl_2$<br>$Cu(CH_3COO)_2$ etc. |
| Zr COMPOUNDS : $Zr(OH)_3$, $ZrCl_4$, $ZrCl_2$ etc. |
| Sn COMPOUNDS : $Sn(OH)^+$, $SnCl_4$, $SnCl_2$ etc. |
| Mn COMPOUNDS : $Mn(NO_3)_2$, $MnSO_4$<br>$MnCl_2$ etc. |
| Fe COMPOUNDS : $Fe(OH)_3$, $FeCl_3$ etc. |
| Zn COMPOUNDS : $Zn(NO_3)_2$, $ZnSO_4$<br>$ZuCl_2$ etc. |
| Au COMPOUNDS : $AuCl$, $AuCl_3$, $AuOH$<br>$Au(OH)_2$, $Au_2O$, $Au_2O_3$, etc. |
| Ag COMPOUNDS : $AgNO_3$, $AgF$, $AgClO_3$<br>$AgOH$, $Ag(NH_3)OH$,<br>$Ag_2SO_4$, etc. |
| Pt COMPOUNDS : $PtCl_2$, $PtO$, $Pt(NH_3)Cl_2$,<br>$PtO_2$, $PtCl_4$, $[Pt(OH)_6]^{2-}$ etc. |

$TiCl_4$ (50%) → PURE WATER → DILUTE

$NH_4OH$ (25%) → PURE WATER → DILUTE

→ NEUTRALIZATION REACTION

→ SOLID-LIQUID SEPARATION

→ GEL OF PRECIPITATE

PURE WATER → WASH → WASTE WATER

→ COOL

$H_2O_2$ (35%) → PEROXIDATE

→ HEAT

→ ULTRAFILTRATION

→ ULTRAFILTRATION

AMORPHOUS-TYPE TITANIUM PEROXIDE DISPERSION

ANATASE-TYPE TITANIUM PEROXIDE DISPERSION

## INTERNATIONAL SEARCH REPORT

| International application No. |
| --- |
| PCT/JP2010/003591 |

A.  CLASSIFICATION OF SUBJECT MATTER
*B01D53/32*(2006.01)i, *B01J35/02*(2006.01)i

According to International Patent Classification (IPC) or to both national classification and IPC

B.  FIELDS SEARCHED

Minimum documentation searched (classification system followed by classification symbols)
B01D53/32, B01J35/02

Documentation searched other than minimum documentation to the extent that such documents are included in the fields searched

| | | | |
| --- | --- | --- | --- |
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C.  DOCUMENTS CONSIDERED TO BE RELEVANT

| Category* | Citation of document, with indication, where appropriate, of the relevant passages | Relevant to claim No. |
| --- | --- | --- |
| X | JP 2003-210996 A  (Sustainable Technology Inc.),<br>29 July 2003 (29.07.2003),<br>entire text<br>(Family: none) | 1-11 |

☐  Further documents are listed in the continuation of Box C.   ☐  See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 20 July, 2010 (20.07.10) | 03 August, 2010 (03.08.10) |

| Name and mailing address of the ISA/ | Authorized officer |
| --- | --- |
| Japanese Patent Office | |
| Facsimile No. | Telephone No. |

Form PCT/ISA/210 (second sheet) (July 2009)

**INTERNATIONAL SEARCH REPORT**

International application No.

PCT/JP2010/003591

For the following reasons, the contents of the respective inventions in claims 1 to 11 are very unclear. Therefore, the international search report was made relating exclusively to "a glass plate provided with a calcium-containing titanium oxide film, and a method for positioning said glass plate in a gas containing carbon dioxide and oxygen" from among the matters seemingly contained in the aforesaid inventions.

1) Concerning "negative gas molecules" appearing in the claims and description, it is mentioned in paragraph [0026] of the description "Carbon dioxide and oxygen, ozone, a halogen gas, a fluorine compound, a chlorine compound, nitrogen oxide, sulfur oxide or ions thereof, etc. sometimes have a negative charge or electrically negatively charged. For example, oxygen can occur as a super oxide anion radical ($O_2^-$) that has a negative charge. Hereinafter, these gas molecules having a negative charge or capable of being negatively charged will be referred to as "negative gas molecules"". Assuming that even such extremely unstable states as $O_2^-$ fall within the category of "negative gas molecules", however, it can be said that any molecules or atoms can be negatively charged by some means. Thus, the scope of the concept "negative gas molecules" is still unknown even though the aforesaid statement is taken into consideration.

2) Although "neutral gas molecules" appears in the claims and description, this expression is not commonly used in the art as a technical term. In addition, the meaning thereof is not defined in the description. Therefore, the meaning of this term is unknown.

3) Since any substances can have "a positive charge" and "a negative charge", the scopes that are specified by "a positively charged substance" and "a negatively charged substance" appearing in the claims and description are unknown.

4) Although "detoxification" appears in the claims and description, the "negative gas molecules" that are to be "detoxified" involve nontoxic gas molecules such as "oxygen". Accordingly, it is impossible to understand the meaning of the "detoxification" treatment.

Form PCT/ISA/210 (extra sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009130440 A
- JP 4180991 B
- JP 4181062 B
- JP H04242499 B
- JP H09165318 B
- JP H05124880 B
- JP H05117578 B
- JP H05179191 B
- JP 2000121543 A
- JP 2003026461 A